(19) Europäisches Patentamt
European Patent Office
Office européen des brevets

(11) EP 2 476 799 B1

(12) **EUROPEAN PATENT SPECIFICATION**

(45) Date of publication and mention of the grant of the patent:
**01.01.2020 Bulletin 2020/01**

(21) Application number: **10815379.2**

(22) Date of filing: **08.09.2010**

(51) Int Cl.:
***D06M 15/227*** *(2006.01)* ***B29B 15/14*** *(2006.01)*
***C08F 8/32*** *(2006.01)* ***D06M 15/00*** *(2006.01)*
***D06M 101/40*** *(2006.01)* ***D06M 13/00*** *(2006.01)*
***D06M 15/263*** *(2006.01)* ***D06M 15/285*** *(2006.01)*
***B29B 15/12*** *(2006.01)* ***B29K 23/00*** *(2006.01)*
***D06M 15/267*** *(2006.01)* ***D06M 15/356*** *(2006.01)*

(86) International application number:
**PCT/JP2010/065399**

(87) International publication number:
**WO 2011/030784 (17.03.2011 Gazette 2011/11)**

(54) **CARBON FIBER BUNDLE AND METHOD FOR PRODUCING SAME**

KOHLENSTOFFFASERBÜNDEL UND HERSTELLUNGSVERFAHREN DAFÜR

FAISCEAU DE FIBRES DE CARBONE ET PROCÉDÉ POUR SA PRODUCTION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **09.09.2009 JP 2009207631**

(43) Date of publication of application:
**18.07.2012 Bulletin 2012/29**

(73) Proprietor: **Mitsubishi Chemical Corporation**
**Tokyo 100-8251 (JP)**

(72) Inventors:
- **SUGIURA, Naoki**
  **Chiyoda-ku**
  **Tokyo 100-8251 (JP)**
- **IWASHITA, Toru**
  **Utsunomiya-shi**
  **Tochigi 321-0953 (JP)**
- **ISHII, Toshiyuki**
  **Sodegaura-shi**
  **Chiba 299-0265 (JP)**
- **ONISHI, Rikuo**
  **Ichihara-shi**
  **Chiba 299-0114 (JP)**

(74) Representative: **Hoffmann Eitle**
**Patent- und Rechtsanwälte PartmbB**
**Arabellastraße 30**
**81925 München (DE)**

(56) References cited:
**WO-A1-2005/073291** **JP-A- 3 181 528**
**JP-A- H0 284 566** **JP-A- 2003 253 563**
**JP-A- 2003 328 271** **JP-A- 2004 263 359**
**JP-A- 2009 197 359** **US-A- 4 720 516**

- **COLBEAUX AIMELINE ET AL: "DIAMINE COUPLING OF MALEIC-ANHYDRIDE-MODIFIED POLYETHYLENE", POLYMER INTERNATIONAL, BARKING, GB, vol. 54, 7 January 2005 (2005-01-07), pages 692-697, XP008048596,**

EP 2 476 799 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### TECHNICAL FIELD

The present invention relates to a carbon fiber bundle used as a reinforcing material for a thermoplastic resin, and to a method of producing the same. Particularly, the present invention relates to a carbon fiber bundle suitable as a reinforcing material for a polyolefin thermoplastic resin, and to a method of producing the same.

### BACKGROUND ART

A carbon fiber bundle is used as a reinforcing material for a thermoplastic resin and has a form in which plural single fibers formed of carbon are combined with each other.

When used as a reinforcing material of a thermoplastic resin, the carbon fiber bundle is generally provided by being cut to a length of 5 to 15 mm. When a pellet in which the carbon fiber bundle is kneaded with a thermoplastic resin is produced, the carbon fiber bundle needs to be quantitatively provided in an extruder, and for doing this, morphological stability of the carbon fiber bundle is important. If the shape of the carbon fiber bundle is inappropriate, unevenness upon discharge will be caused in some cases. Moreover, since a constant extruding speed is not obtained, breakage of the carbon fiber bundle, so-called strand breakage, occurs, which leads to concern about a severe reduction in the pellet productivity.

Moreover, in recent years, a material called a long-fiber pellet has drawn attention. In producing the long-fiber pellet, the carbon fiber bundle is subjected to a pellet production process in a form of a continuous fiber. In this case, fluff or fly is easily generated in the carbon fiber bundle, and the carbon fiber bundle easily spreads, which makes it difficult to handle the carbon fiber bundle.

In addition, the carbon fiber bundle is woven into a fabric and used as a sheet material impregnated with a thermoplastic resin in some cases, so a weaving property of the carbon fiber bundle or handleability of the woven fabric is also considered to be an important property.

For the reasons described above, in order to improve the handleability of the carbon fiber bundle or the physical properties of a material mixed with the carbon fiber bundle, a carbon fiber bundle converging by a sizing treatment is generally used. The sizing treatment refers to a treatment of causing, for example, about 2 to 5% by mass of a sizing agent which is suitable for a matrix resin that may contain, for example, an epoxy resin as a main component to apply to the surface of carbon fiber.

Herein, as the thermoplastic resin used as the matrix resin, a polycarbonate resin, a nylon resin, a polyester resin, and the like are used. In addition, in recent years, with respect to recyclability and economics, a polyolefin resin has been increasingly used in many cases. Particularly, a polypropylene resin is a resin that has drawn attention recently.

However, since the polyolefin resin is basically non-polar, interface adhesion of this resin to carbon fiber or glass fiber is very poor. Consequently, in many cases, the effect of improving mechanical properties of this resin as a reinforcing material is not sufficiently exhibited. For this reason, a method of improving adhesion by adding an acid-modified polyolefin resin to a matrix resin, a method of performing a sizing treatment on carbon fiber or glass fiber by using a sizing agent constituted with a polyolefin resin and a silane-coupling agent, and the like have been suggested.

In addition, as disclosed in Patent Document 1, a method of performing a sizing treatment on carbon fiber or glass fiber by using a sizing agent containing acid-modified polypropylene as an essential component is known.
Patent Document 4 relates to a polyolefin resin composition comprising a polyolefin modified with an unsaturated carboxylic acid, at least one of polyepoxides, polyisocyanates and polyamines, and a reinforcement.

### PRIOR ART DOCUMENTS

### PATENT DOCUMENTS

[Patent Document 1] JP-A-06-107442
[Patent Document 2] JP-A-02-84566
[Patent Document 3] JP-A-2006-124847
[Patent Document 4] US 4,720,516 A

SUMMARY OF THE INVENTION

PROBLEMS TO BE SOLVED BY THE INVENTION

However, in the method of adding an acid-modified polyolefin resin to a matrix resin, a large amount of the acid-modified polyolefin resin needs to be added, so this method does not satisfy recyclability and economics.

In addition, when the sizing treatment is performed on carbon fiber by using a sizing agent constituted with a polyolefin resin and a silane-coupling agent, since the carbon fiber does not have as many hydroxyl groups on the surface thereof as the glass fiber, it is difficult to obtain the effect of improving the interface adhesion.

Moreover, as disclosed in Patent Document 1, in the method of performing sizing treatment by using a sizing agent containing acid-modified polypropylene as an essential component, relatively excellent interface adhesion to a polyolefin resin is realized. However, the effect obtained from the sizing treatment performed on carbon fiber is not necessarily sufficient.

Patent Document 2 discloses a method of performing a sizing treatment on carbon fiber by using a sizing agent formed of an amino-modified polyolefin resin. In some cases, the amino-modified polyolefin resin disclosed in Patent Document 2 has both an acid-modified portion and an amino-modified portion. In this case, the interaction between an acid group and an amino group in a molecule is caused. This leads to a problem in exhibiting a coupling effect between carbon fiber and a matrix resin, which is a role of the sizing agent, and excellent interface adhesion may not be realized. In addition, when the modified polyolefin resin is dissolved in an organic solvent to apply to carbon fiber, the method of Patent Document 2 cannot cause the modified polyolefin resin to evenly apply to the surface of carbon fiber. This is because since the organic solvent has a higher vapor pressure compared to water, volatizes easily, and is at risk of igniting at high temperature, the organic solvent needs to be dried at a relatively low temperature. Moreover, in Patent Document 2, the modified polyolefin resin having applied is not sufficiently treated thermally, and excellent interface adhesion may not be realized.

Patent Document 3 discloses a method of performing a sizing treatment on carbon fiber by using a sizing agent formed of an acid-modified polyolefin resin and then performing a heat treatment. Patent Document 3 discloses that the heat treatment makes it possible to decompose and remove an unsaturated carboxylic acid monomer or a surfactant that acts as an adhesion-inhibiting factor, and to evenly apply the modified polyolefin resin onto the surface of carbon fiber by melting the resin. Patent Document 3 also discloses a heat treatment performed under conditions that do not thermally decompose an acid-modified polyolefin resin. Since the acid-modified polyolefin resin is a constituent component, the heat treatment needs to be performed to exclude the influence of the remaining unsaturated carboxylic acid monomer. Moreover, on the other hand, since drying is performed at low temperature, the acid-modified polyolefin resin causes uneven application to the surface of carbon fiber, and to resolve this matter, the heat treatment is required. However, when a polyolefin resin is used as a matrix resin, by simply causing a sizing agent component to evenly apply, sufficient interface adhesion cannot be exhibited. In addition, since the heat treatment also decomposes and removes a surfactant, there is a problem in that wettability to the matrix resin is markedly reduced.

The present invention has been made in consideration of the circumstances described above, and an object thereof is to provide a carbon fiber bundle which can exhibit excellent interface adhesion to a polyolefin resin, particularly to a polypropylene resin and is useful for reinforcing the polyolefin resin, and a method of producing the same.

MEANS FOR SOLVING THE PROBLEM

An aspect of the present invention relates to a carbon fiber bundle to which the ammo group-containing modified polyolefin resin of claim 1 has been applied, wherein the amount of the applying amino group-containing modified polyolefin resin, as defined below, is 0.2 to 5.0 % by mass.

Another aspect of the present invention relates to a carbon fiber bundle according to claim 1, wherein the carbon fiber bundle is obtained by a heat treatment at 200 to 300°C for 5 seconds to 3 minutes, after the amino group-containing modified polyolefin resin is caused to apply to the surface of the carbon fiber bundle in an amount of 0.2 to 5.0% by mass.

A further aspect of the present invention relates to the carbon fiber bundle wherein the amount of the applying amino group-containing modified polyolefin resin is 0.5 to 4.0% by mass, and the carbon fiber bundle is obtained by a heat treatment at 200 to 260°C for 15 seconds to 3 minutes, after the amino group-containing modified polyolefin resin is caused to apply to the surface of the carbon fiber bundle.

A yet further aspect of the present invention relates to the carbon fiber bundle wherein the amino group-containing modified polyolefin resin according to claim 1 caused to apply to the carbon fiber bundle by bringing an aqueous sizing agent dispersion containing the amino group-containing modified polyolefin resin into contact with the carbon fiber bundle.

A still further aspect of the present invention relates to the carbon fiber bundle, wherein a limiting viscosity of the amino group-containing modified polyolefin resin according to claim 1 measured in tetralin at 135°C is 0.05 to 1.0 dL/g.

A yet further aspect of the present invention relates to the carbon fiber bundle, wherein the amino group-containing modified polyolefin resin according to claim 1 is a product of a reaction between one kind of compound selected from the group consisting of an ethylene-ethyl acrylate-maleic anhydride copolymer, a maleic anhydride grafted polyethylene resin and a maleic anhydride grafted polypropylene resin, and a compound having two or more amino groups.

The amino group-containing modified polyolefin resin in the first of the above aspects is a copolymer that contains an amino group and 70 to 99.98 mol% of a repeating unit represented by the following General Formula (I) and 0.02 to 30 mol% of a repeating unit represented by the following General Formula (II) in a molecule.

[Chem. 1]

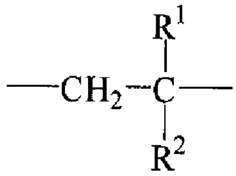

· · · (I)

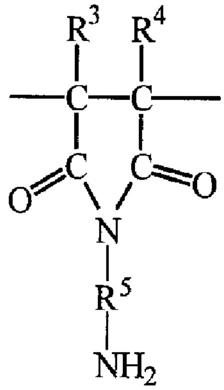

· · · (II)

In Formulae (I) and (II), each of $R^1$ and $R^2$ independently represents a hydrogen atom, an alkyl group having 1 to 10 carbon atoms, a cycloalkyl group having 3 to 8 carbon atoms, an aryl group having 6 to 10 carbon atoms, an alkoxy group having 1 to 4 carbon atoms, an alkoxycarbonyl group having 1 to 18 carbon atoms, or an alkylcarboxyl group having 1 to 17 carbon atoms; each of $R^3$ and $R^4$ independently represents a hydrogen atom or an alkyl group having 1 to 6 carbon atoms; and $R^5$ represents an alkylene group having 1 to 12 carbon atoms, a cycloalkylene group having 5 to 17 carbon atoms, an arylene group having 6 to 12 carbon atoms, an arylalkylene group having 7 to 12 carbon atoms, or a polyoxyalkylene group having 4 to 30 carbon atoms. $R^1$ to $R^5$ may be the same as or different from each other in each repeating unit.

A yet further aspect of the present invention relates to a method of producing a carbon fiber bundle, further including applying 0.2 to 5.0% by mass of the amino group-containing modified polyolefin resin to the surface of the carbon fiber bundle.

A still further aspect of the present invention relates to the method of producing a carbon fiber bundle, further including performing a heat treatment at 200 to 300°C for 5 seconds to 3 minutes after applying the amino group-containing modified polyolefin resin to the surface of the carbon fiber bundle.

A yet further aspect of the present invention relates to the method of producing a carbon fiber bundle, including applying 0.5 to 4.0% by mass of the amino group-containing modified polyolefin resin to the surface of the carbon fiber bundle and then performing a heat treatment at 200 to 260°C for 15 seconds to 3 minutes.

A still further aspect of the present invention relates to the method of producing a carbon fiber bundle, wherein in applying the amino group-containing modified polyolefin resin to the carbon fiber bundle, the applying comprising bringing an aqueous sizing agent dispersion containing the amino group-containing modified polyolefin resin into contact with the carbon fiber bundle.

A yet further aspect of the present invention relates to the method of producing a carbon fiber bundle, wherein after applying the aqueous sizing agent dispersion to the surface of the carbon fiber bundle by bringing the carbon fiber bundle into contact with the aqueous sizing agent dispersion, the method further comprising performing a drying treatment,

and then performing the heat treatment.

A still further embodiment of the present invention relates to the method of producing a carbon fiber bundle, wherein the drying treatment is performed at 100 to 200°C.

EFFECTS OF THE INVENTION

The carbon fiber bundle of the present invention can exhibit excellent interface adhesion to a polyolefin resin, particularly to a polypropylene resin, and is useful for reinforcing the polyolefin resin.

Moreover, according to the method of producing a carbon fiber bundle of the present invention, excellent interface adhesion to a polyolefin resin, particularly to a polypropylene resin can be exhibited, and a carbon fiber bundle that is useful for reinforcing the polyolefin resin is obtained.

EMBODIMENTS OF THE INVENTION

Hereinafter, the present invention will be described in detail.

The carbon fiber bundle of the present invention is obtained by causing an amino group-containing modified polyolefin resin to apply to a carbon fiber bundle.

The detail of the method of causing the amino group-containing modified polyolefin resin to apply will be described later. However, as the method, a method of using, as a sizing agent, an aqueous sizing agent dispersion containing an amino group-containing modified polyolefin resin and causing the aqueous sizing agent dispersion to apply to a carbon fiber bundle is preferable (this method will be referred to as a "sizing treatment" hereinafter).

The amount of the applying amino group-containing modified polyolefin resin is 0.2 to 5.0% by mass, preferably 0.4 to 4.0% by mass, and more preferably 0.5 to 4.0% by mass. If the applying amount is in this range, about 1 to 3 molecular layers covering a single fiber surface of the carbon fiber are formed, which is thus suitable. If the applying amount is less than 0.2% by mass, there is a concern that an effect of causing the amino group-containing modified polyolefin resin to apply will be insufficient, and processability, handleability, and affinity with a sizing agent will be reduced in some cases. On the other hand, if the applying amount exceeds 5% by mass, the amino group-containing modified polyolefin resin is interposed between single fibers and causes bridging. Therefore, the movement between single fibers is restricted due to pseudo-adhesion between the single fibers, and spreadability of the carbon fiber bundle easily deteriorates, and consequently, there is a concern that uniformity of the carbon fiber bundle will be impaired. In addition, permeability of a sizing agent is hindered, and a uniform carbon fiber bundle is not easily obtained, which leads to a concern of the deterioration of properties of the carbon fiber bundle.

The amount of the applying amino group-containing modified polyolefin resin can be adjusted by adjusting, for example, a solid content concentration of the aqueous sizing agent dispersion containing the amino group-containing modified polyolefin resin. Specifically, there is a tendency that the higher the solid content concentration of the aqueous sizing agent dispersion, the more the applying amount.

To calculate the amount of the applying amino group-containing modified polyolefin resin, the total amount of a sizing agent applying to a carbon fiber bundle is measured from a mass difference before and after a heat decomposition treatment by a heat decomposition method, based on SRM14-90 of a SACMA method, and the ratio of applying amino group-containing modified polyolefin resin to the carbon fiber bundle before and after the heat decomposition treatment is calculated. Specifically, the applying amount can be calculated from the following Formula (1). Here, when the amino group-containing modified polyolefin resin and another component are concurrently used as a sizing agent, the amount of the applying amino group-containing modified polyolefin resin is calculated using a mass ratio of the amino group-containing modified polyolefin resin contained in the total solid component in the aqueous sizing agent dispersion.

$$\text{Applying amount (\%)} = 100 \times (W1 - W2)/W1 \quad \cdots (1)$$

W1: mass of carbon fiber before heat decomposition treatment

W2: mass of carbon fiber after heat decomposition treatment

<Amino Group-containing Modified Polyolefin Resin>

The amino group-containing modified polyolefin resin (hereinafter, simply referred to as a "compound (a)" in some cases) is a component serving as a useful coupling agent in which an amino group in a molecule thereof enhances the interaction between the resin and the surface of a carbon fiber bundle and a polyolefin chain of the skeleton thereof forms a strong bond with a matrix resin by entanglement of molecules, when a carbon fiber bundle is combined with a

matrix resin such as a polyolefin resin.

The main chain of the compound (a) is formed of a carbon-carbon bond, and the compound (a) has an amino group in at least a portion of the end of a side chain or a main chain.

Specific examples of the compound (a) include (i) a product of a reaction between an acid-modified polyolefin resin (hereinafter, simply referred to as a "compound (b)" in some cases) and a compound having an amino group, (ii) a product of a reaction between an epoxylated polyolefin resin (hereinafter, simply referred to as a "compound (c)" in some cases) and a compound having an amino group, and the like.

Particularly, as the compound (a), a product of a reaction between the compound (b) or (c) and a compound having two or more amino groups is suitable since such a product has a primary amino group. If the compound (a) has a primary amino group, the interaction between the compound (a) and a matrix resin or the surface of carbon fiber becomes excellent, and a stronger bond is formed, which is thus preferable.

The compound (b) is not particularly limited as long as this compound is modified with an acid so as to have a functional group reacting with an amino group. In addition, the polyolefin skeleton may be single olefin of ethylene, propylene, butene, or the like, or may be a plurality of different olefins. Examples of the olefin include olefins having 2 to 8 carbon atoms.

Examples of the compound (b) include the following compounds.

(1): compound (b-1)

An acid-modified polyolefin resin having skeletons represented by the General Formula (I) and the following General Formula (III)

[Chem. 2]

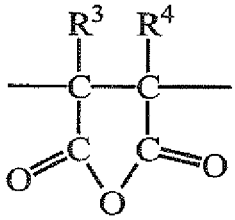

· · · (III)

In Formula (III), each of $R^3$ and $R^4$ independently represents a hydrogen atom or an alkyl group having 1 to 6 carbon atoms.

The acid-modified polyolefin resin having a skeleton represented by Formula (I) and a skeleton represented by Formula (III) is obtained by, for example, copolymerizing an olefin with maleic anhydride. In addition, an olefin and maleic acid may be copolymerized while being dehydrated. In this case, other unsaturated carboxylic acids can also be copolymerized with the above components. As the unsaturated carboxylic acids, it is possible to use one or two or more kinds of unsaturated carboxylic acid esters including unsaturated carboxylic acids such as acrylic acid, methacrylic acid, fumaric acid, and itaconic acid; acrylic acid esters such as methyl acrylate, ethyl acrylate, and propyl acrylate; and methacrylic acid esters such as methyl methacrylate, ethyl methacrylate, and propyl methacrylate as well as unsaturated carboxylic acids such as vinyl acetate.

Specific examples of the acid-modified polyolefin resin having a skeleton represented by Formula (I) and a skeleton represented by Formula (III) include an ethylene-maleic anhydride copolymer, a propylene-maleic anhydride copolymer, an ethylene-propylene-maleic anhydride copolymer, an ethylene-ethyl acrylate-maleic anhydride copolymer, an ethylene-vinyl acetate-maleic anhydride copolymer, and the like.

(2): compound (b-2)

An acid-modified polyolefin resin having a skeleton represented by the General Formula (I) in a main chain and having a group represented by the following General Formula (IV) in a side chain

[Chem. 3]

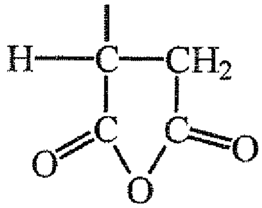

· · · (IV)

Examples of the acid-modified polyolefin resin having a skeleton represented by General Formula (I) in a main chain and having a group represented by General Formula (IV) in a side chain include an acid-modified polyolefin resin that is obtained by reacting maleic acid or maleic anhydride with a polyolefin resin as well as a radical initiator by means of melting and kneading.

Examples of the polyolefin resin include a polyolefin resin that is obtained by polymerizing a single olefin or a plurality of olefins of ethylene, propylene, or butene, in the presence of a polymerization catalyst such as a so-called Ziegler-Natta catalyst. As the polyolefin resin, a polypropylene homopolymer is preferable.

The radical initiator is not particularly limited, and examples thereof include butyl peroxide, dicumyl peroxide, benzoyl peroxide, and the like. The amount of the radical initiator used may be about 0.01 to 1 part by mass based on 100 parts by mass of the polyolefin resin.

In addition, a temperature of melting and kneading is generally about 160 to 270°C.

(3): compound (b-3)

An acid-modified polyolefin resin having a skeleton represented by the General Formula (I) in a main chain and having a group represented by the following General Formula (V) in a side chain

[Chem. 4]

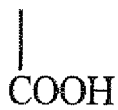

· · · (V)

The acid-modified polyolefin resin having a skeleton represented by Formula (I) in a main chain and having a group represented by the Formula (V) in a side chain is obtained by, for example, copolymerizing an olefin with unsaturated carboxylic acid, or copolymerizing an olefin with an unsaturated carboxylic acid ester, followed by hydrolysis.

Examples of the unsaturated carboxylic acid include acrylic acid, methacrylic acid, fumaric acid, and the like. On the other hand, examples of the unsaturated carboxylic acid ester include acrylic acid esters such as methyl acrylate, ethyl acrylate, and propyl acrylate; methacrylic acid esters such as methyl methacrylate, ethyl methacrylate, and propyl methacrylate; vinyl acetate, and the like.

In addition, examples of the olefin usable herein include the olefins exemplified above. The polymerization conditions and hydrolysis conditions are not particularly limited, and known methods may be used to perform the polymerization and hydrolysis.

The compounds (b-1) and (b-3) preferably contain 70 to 99.98 mol% of a constituent unit represented by the General Formula (I) and 0.02 to 30 mol% of a constituent unit originating from a compound for introducing the group of the General Formula (III) or (V) which corresponds to the respective compounds. The compound (b-2) preferably contains 0.5 to 20% by mass of the group of the General Formula (IV). In each compound, if the amount of each of the constituent units or the groups contained is less than the lower limit described above, adhesion to the carbon fiber becomes insufficient, and if the amount exceeds the upper limit described above, affinity with the polyolefin becomes insufficient. The compound (b) may contain a repeating unit other than the General Formula (I) or (III), or a side chain other than the side chain represented by the General Formula (IV) or (V), within a range that does not impair the effects of the present

invention.

As the compound (b) described above, commercially available compounds can be used. Examples thereof include a YOUMEX series (product name, maleic anhydride grafted polyethylene, maleic anhydride grafted polypropylene) manufactured by Sanyo Chemical Industries, Ltd, a BONDINE series (product name, an ethylene-ethyl acrylate-maleic anhydride copolymer) manufactured by ATOFINA Chemical Inc, a REXPEARL ET series (product name, an ethylene-ethyl acrylate-maleic anhydride copolymer) manufactured by Japan Polyolefins, Co., Ltd, Hostamont AR503 and AR504 (product names, maleic anhydride grafted polypropylene) manufactured by Clariant, and the like.

As the compound (c), compounds obtained by copolymerizing epoxy group-containing monomers such as glycidyl methacrylate, methyl glycidyl methacrylate, 3,4-epoxycyclohexyl methyl acrylate, and 3,4-epoxycyclohexyl methyl methacrylate with an olefin are suitable.

The polyolefin skeleton may be a single olefin of ethylene, propylene, or butene, or may be a copolymer of these. The copolymer may be a random copolymer or a block copolymer.

The mass average molecular weight of the compounds (b) and (c) may be appropriately selected according to purposes, but generally is 3000 to 600000.

As the compound having an amino group that is reacted with the compound (b) or (c), a compound having two or more amino groups is preferable. Specific examples of the compound include diamines represented by the following General Formula (VI).

$$H_2N\text{-}R^6\text{-}NH_2 \cdots \qquad \text{(VI)}$$

In Formula (VI), $R^6$ represents an alkylene group having 1 to 12 carbon atoms (preferably an alkylene group having 1 to 8 carbon atoms), a cycloalkylene group having 5 to 17 carbon atoms (preferably a cycloalkylene group having 6 to 10 carbon atoms), an arylene group having 6 to 12 carbon atoms, an arylalkylene group having 7 to 12 carbon atoms (preferably an arylalkylene group having 8 to 10 carbon atoms), or a polyoxyalkylene group having 4 to 30 carbon atoms (preferably a polyoxyalkylene group having 4 to 15 carbon atoms).

Examples of the alkylene group include a methylene group, an ethylene group, a propylene group, a tetramethylene group, a hexamethylene group, and the like.

Examples of the cycloalkylene group include a cyclohexylene group, a methylene cyclohexylmethylene group, and the like.

Examples of the arylene group include a phenylene group, an oxydiphenylene group, and the like.

Examples of the arylalkylene group include a xylylene group and the like.

Examples of the polyoxyalkylene group include a polyoxymethylene group, a polyoxyethylene group, a polyoxypropylene group, and the like.

Specific examples of the diamine include linear or branched aliphatic alkylenediamines such as ethylenediamine, 1,3-diaminopropane, 1,4-diaminobutane, 1,5-diaminopentane, hexamethylene diamine, 1,7-diaminoheptane, 1,8-diaminooctane, 1,9-diaminononane, 1,10-diaminodecane, piperazinyl aminoethane, 2,2,5-trimethyl hexanediamine, and 2,2,4-trimethyl hexanediamine; alicyclic diamines such as isophorone diamine, 1,3-bis(aminomethyl)cyclohexane, bis(4-aminocyclohexyl)methane, bisaminomethylhexahydro-4,7-methane indane, 1,4-cyclohexanediamine, 1,3-cyclohexanediamine, 2-methylcyclohexanediamine, 4-methylcyclohexanediamine, and bis(4-amino-3,5-dimethylcyclohexyl)methane; arylalkyl diamines such as m-xylylenediamine and p-xylylenediamine; aryl diamines such as p-phenylenediamine and 4,4'-diaminodiphenyl ether; polyoxyalkylene diamines such as polyoxypropylene diamine and polyoxyethylene diamine, and the like. Among these, aliphatic and alicyclic diamines are particularly preferable. Herein, a salt of the above diamine may be used. The salt may be either a partially neutralized salt (mono-salt) of or a completely neutralized salt (di-salt) of the diamine, but it is preferable to use a partially neutralized salt since the reaction efficiency thereof is high.

The diamine is used preferably as a partially neutralized salt of an acid, and as the acid, it is desirable to select an acid having an acid strength stronger than that of carboxylic acid. Specific examples thereof include sulfonic acids such as sulfuric acid, benzene sulfonate, toluenesulfonaic acid and naphthalenesulfonic acid; halogeno acids such as hydrochloric acid, hydrofluoric acid, hydrobromic acid, and hydroiodic acid; nitric acid, boric acid, phosphoric acid, and the like. Among these, hydrochloric acid and toluenesulfonic acid are preferable.

In producing the salt of a diamine compound, the above diamine and acid are used in the form of a salt in which the molar ratio corresponds to a degree of neutralization by the acid of 50 to 100% of total amino groups of the diamine. If the molar ratio is less than 50%, crosslinking or gelation easily occurs during an imidization reaction. If the molar ratio exceeds 100%, it takes a long time for the imidization reaction, which is economically disadvantageous. A preferable range of the molar ratio is 50 to 80%.

The diamine salt can be easily prepared by a neutralization reaction between a corresponding diamine and a corresponding acid. For example, the diamine may be added dropwise to an alcohol solution of the acid, followed by concentration if necessary, and the resultant may be recrystallized with alcohol and isolated so as to be used as a raw

material. Moreover, a partially neutralized salt of the diamine and the acid may be formed in non-protonic polar solvents such as 1,3-dimethyl-2-imidazolidinone (DMI), N-methyl-2-pyrrolidone, dimethylsulfoxide (DMSO), dimethylsulfone, dioxane, 1,2-dimethoxyethane, hexamethylene phosphate-triamide, and tetramethylurea, and used as is for the reaction. With respect to operation, the latter method is simple and preferable.

The compound (a) is obtained by, for example, reacting the compound (b) or (c) with the diamine by a common method.

The reaction between the compound (b-1) or (b-2) and the diamine is an imidization reaction, and the reaction between the compound (b-3) and the diamine is an acid amidation reaction.

The reaction method is not particularly limited. For example, the compound (b) may be caused to react with the diamine salt (imidization reaction or acid amidation reaction), and then the resultant may be deacidified by being brought into contact with a base, whereby the compound (a) can be more efficiently produced.

It is also possible to perform the imidization reaction or the acid amidation reaction by using a screw extruder or the like, in a solvent-free molten state. However, for the purpose of causing the reaction to evenly occur, it is desirable to use an inert solvent. Examples of the inert solvent used for such a purpose include aromatic hydrocarbons such as benzene, toluene, xylene, cumene, cymene, ethyl toluene, propyl benzene, and diethyl benzene; alicyclic hydrocarbons such as methyl cyclopentane, cyclohexane, ethyl cyclopentane, methyl cyclohexane, 1,1-dimethyl cyclohexane, and ethyl cyclohexane; aliphatic hydrocarbons such as hexane, heptane, octane, decane, methylheptane, 3-ethylhexane, and trimethylpentane; non-protonic polar solvents such as DMI, tetramethylurea, dimethyl sulfone, dioxane, 1,2-dimethoxyethane, hexamethylene phosphate triamide, DMSO, and N-methyl-2-pyrrolidone.

In the imidization reaction or the acid amidation reaction, reactants showing greatly different polarities are reacted. Accordingly, it is preferable to concurrently use a non-polar solvent and a polar solvent in general.

The amount of the solvent used is not particularly limited, and may be appropriately selected depending on circumstances. Generally, the amount may be determined in a range of from 0.3 to 20 times, preferably from 1 to 10 times the amount of compounds (b-1) to (b-3) used as a raw material (that is, the compound having, as a functional group, a substituted or unsubstituted succinic anhydride group or a carboxyl group that reacts with an amino group), in terms of a mass ratio. When the amount is less than 0.3 times, the reaction mixture becomes highly viscous due to the insufficient dilution effect, which leads to problems in handling in some cases. On the other hand, even if the amount is more than 20 times, the improvement of the effect resulting from this amount used is not particularly observed, which is economically disadvantageous.

It is not particularly necessary to use a catalyst for the imidization reaction or the acid amidation reaction, but if the catalyst is used, tertiary amines such as trimethylamine, triethylamine, tributylamine, N,N-dimethylaniline, N,N-diethylaniline, and 1,8-diazabicyclo(5.4.0)undecene-7 are preferable.

In addition, in the imidization reaction or the acid amidation reaction, the ratio between the compound (b) as a raw material and the diamine salt used varies with the type of the raw material to be used and the situation, and cannot be uniquely determined. However, in general, the molar proportion is 1.0 to 10 times, preferably 1.05 to 5.0 times that of a substituted or unsubstituted succinic anhydride group or a carboxyl group contained in the raw material, based on an unneutralized amino group of the diamine. If the proportion is less than 1.0 time, a succinic anhydride group or a carboxyl group easily remains without being imidized or acid-amidated even after the reaction ends. Consequently, there is a concern that a primary amino group reproduced in a deacidification process as a post process will react with the succinic anhydride group or carboxyl group to cause gelation by amide crosslinking, and that the effects of the present invention will be diminished. On the other hand, if the molar ratio exceeds 10 times, there is an advantage that the imidization or the acid amidation reaction itself proceeds more rapidly. However, a large amount of reaction reagent is required, which is economically disadvantageous.

In the method of the imidization and the acid amidation, the temperature and time of the reaction varies depending on whether a solvent and a catalyst are used. Generally, the reaction is performed at 100 to 300°C, preferably at 130 to 260°C for 1 to 20 hours. If the reaction temperature is lower than 100°C, it takes a long time for the reaction in some cases, and if the temperature exceeds 300°C, physical properties deteriorate due to the coloration of reactants and the heat decomposition of the raw material mixture.

There is no particular limitation on the order of introducing raw materials of the reaction, and the raw materials can be introduced in various forms. Generally, the compound (b) as a raw material is evenly dissolved in a solvent described above, and then powder or a solution of the diamine and acid salt described above is slowly added thereto; alternatively, they are introduced in the opposite order. The raw materials may be introduced while the solvent is heated to reflux.

While the reaction proceeds, water is also generated. Therefore, the generated water undergoes azeotropy together with the used solvent. Accordingly, by removing the water having undergone azeoptropy out of the reaction system by using a Dean-Stark water separator, it is possible to cause the reaction to efficiently proceed.

The completion of the imidization reaction can be confirmed by checking that the azeotropic water is not observed any more, and checking that the increase in absorption strength of carbonyl of imide near 1700 $cm^{-1}$ is not

observed any more by means of collecting a portion of the reaction mixture and measuring an infrared absorption spectrum.

On the other hand, the completion of the acid amidation reaction can be confirmed by checking that the azeotropic water is not observed any more, and checking that the increase in absorption strength of carbonyl of acid amide near 1650 $cm^{-1}$ is not observed any more by means of collecting a portion of the reaction mixture and measuring an infrared absorption spectrum.

The reaction mixture obtained in the above manner contains the salt of the compound (a) in which primary amino groups are combined through an imide bond or an acid amide bond. Directly or after being made into powder by being introduced to non-solvents such as methanol, isopropanol, isobutanol, and hexane if necessary, the reaction mixture is brought into contact with an aqueous basic solution or with a basic mixed solution containing methanol and water if necessary so as to be deacidifed. In this manner, the reaction mixture can be converted into free amine.

Specific examples of the base used for the deacidification include water-soluble bases such as sodium hydroxide, potassium hydroxide, lithium hydroxide, sodium carbonate, potassium carbonate, sodium bicarbonate, potassium bicarbonate, ammonia, methylamine, ethylamine, trimethylamine, and triethylamine. Among these, for economic reasons, sodium hydroxide, sodium carbonate, and sodium bicarbonate are preferable.

The compound (a) can be obtained in the above manner. However, this compound (a) is preferably obtained by reacting the (b-1) with the diamine represented by the General Formula (VI), and preferably contains 70 to 99.98 mol% of the repeating unit represented by the General Formula (I) and 0.02 to 30 mol% of the repeating unit represented by the General Formula (II). The compound (a) more preferably contains 75 to 99.70 mol% of the repeating unit represented by the General Formula (I) and 0.30 to 25 mol% of the repeating unit represented by the General Formula (II), and even more preferably contains 80 to 99.50 mol% of the repeating unit represented by the General Formula (I) and 0.50 to 20 mol% of the repeating unit represented by the General Formula (II).

In the General Formulae (I) and (II), each of $R^1$ and $R^2$ independently represents a hydrogen atom, an alkyl group having 1 to 10 carbon atoms, a cycloalkyl group having 3 to 8 carbon atoms, an aryl group having 6 to 10 carbon atoms, an alkoxy group having 1 to 4 carbon atoms, an alkoxycarbonyl group having 1 to 18 carbon atoms, and an alkylcarboxyl group having 1 to 17 carbon atoms.

Examples of the alkyl group include a methyl group, an ethyl group, a propyl group, a butyl group, a pentyl group, a hexyl group, a heptyl group, an octyl group, a nonyl group, a decyl group, and the like.

Examples of the cycloalkyl group include a cyclohexyl group, cyclooctyl group, a cyclodecyl group, and the like.

Examples of the aryl group include a phenyl group, a p-methylphenyl group, an m-methylphenyl group, and the like.

Examples of the alkoxy group include a methoxy group, an ethoxy group, a propoxy group, a butoxy group, and the like.

Examples of the alkoxycarbonyl group include a methoxycarbonyl group, an ethoxycarbonyl group, a propoxycarbonyl group, a butoxycarbonyl group, and the like.

Examples of the alkylcarboxyl group include a methylcarboxyl group, an ethylcarboxyl group, a propylcarboxyl group, a butylcarboxyl group, and the like.

Each of $R^3$ and $R^4$ independently represents a hydrogen atom or an alkyl group having 1 to 6 carbon atoms.

Examples of the alkyl group include a methyl group, an ethyl group, a propyl group, a butyl group, a pentyl group, a hexyl group, and the like.

$R^5$ represents an alkylene group having 1 to 12 carbon atoms (preferably an alkylene group having 1 to 8 carbon atoms), a cycloalkylene group having 5 to 17 carbon atoms (preferably a cycloalkylene group having 6 to 10 carbon atoms), an arylene group having 6 to 12 carbon atoms, an arylalkylene group having 7 to 12 carbon atoms (preferably an arylalkylene group having 8 to 10 carbon atoms), and a polyoxyalkylene group having 4 to 30 carbon atoms (preferably a polyoxyalkylene group having 4 to 15 carbon atoms).

Examples of the alkylene group include a methylene group, an ethylene group, a propylene group, a tetramethylene group, a hexamethylene group, and the like.

Examples of the cycloalkylene group include a cyclohexylene group, a methylene cyclohexylmethylene group, and the like.

Examples of the arylene group include a phenylene group, an oxydiphenylene group, and the like.

Examples of the arylalkylene group include a xylylene group and the like.

Examples of the polyoxyalkylene group include a polyoxymethylene group, a polyoxyethylene group, a polyoxypropylene group, and the like.

In addition, $R^1$ to $R^5$ may be the same as or different from each other in each repeating unit.

If the amount of the contained repeating unit represented by the General Formula (II) is less than 0.02 mol%, adhesion to the carbon fiber becomes insufficient, and if the amount exceeds 30 mol%, affinity with polyolefin becomes insufficient.

As the compound for introducing the skeleton of the General Formula (II), maleic anhydride is preferable.

The compound (a) constituted with the repeating unit represented by the General Formula (I) and the repeating unit represented by the General Formula (II) may contain a repeating unit other than the repeating unit represented by the General Formula (I) or the repeating unit represented by the General Formula (II), within a range that does not impair the effects of the present invention.

The molecular weight of the compound (a) is not particularly limited, but the limiting viscosity (measured in tetralin at 135°C) as an index of molecular weight is preferably 0.05 to 1.0 dL/g.

If the limiting viscosity exceeds 1.0 dL/g, the number of molecules of the polymer per unit mass is reduced, and the interface adhesion cannot be sufficiently strengthened. On the other hand, if the limiting viscosity is less than 0.05 dL/g, the coupling effect in an interfacial phase between the carbon fiber and the resin is diminished, and sufficient adhesion cannot be obtained.

The content (mol%) of an amino group in the compound (a) is preferably 0.02 to 30 mol%, and more preferably 0.05 to 5.0 mol%.

If the content of the amino group is less than 0.02 mol%, interaction between the compound (a) and the surface of single fibers of the carbon fiber bundle becomes insufficient, and a high degree of interface adhesion is not easily obtained. If the content of an amino group exceeds 30 mol%, affinity with a matrix resin, particularly to a polyolefin resin becomes insufficient. As a result, entanglement with molecules become insufficient, and it is difficult to strengthen the interface adhesion.

The content of an amino group can be measured in the following manner, based on the method disclosed in Macromolecules, Vol. 26, pp 2087-2088, (1993).

First, 1.0 g of amino group-containing modified polyolefin (compound (a)), 50 mL of p-xylene, 10 mL of pyridine, and 5 mL of benzoyl chloride are added to a 200 mL two-necked eggplant-shaped flask, followed by stirring under heating at 140°C for 6 hours in a nitrogen atmosphere, thereby obtaining a polymer solution.

Thereafter, the obtained polymer solution is added to 1 L of methanol and sufficiently stirred, and the precipitated solid fraction (polymer) is recovered through filtering. This polymer is washed with methanol several times, followed by vacuum drying at 80°C for 6 hours. The polymer obtained in this manner is molded by press molding at 190°C, and then the infrared absorption spectrum is measured.

For quantitating the amino group, an absorbency ratio between absorption (1645 $cm^{-1}$) of a carbonyl group (C=O) generated from a reaction between an amino group and benzoyl chloride and an absorption band specific to polyolefin is used. During the quantitation, a standard curve is used which is created from the infrared absorption spectrum of a blend (190°C, press molding product) of polyolefin powder and various amounts of 1-butyl(2-methylpropyl)benzamide.

In the present invention, as the compound (a), poly-N-vinyl acetamide or the like can also be used. The poly-N-vinyl acetamide may be a copolymer with ethylene, propylene or butene, and the copolymer may be either a random copolymer or a block copolymer.

<Carbon Fiber Bundle>

The carbon fiber bundle used in the present invention is not particularly limited. Preferably, the carbon fiber bundle is a combination of a plurality of strands of single fibers that has a plurality of wrinkles, which show 40 nm or more of a difference in height between a highest portion and a lowest portion in an area of a circumferential length of 2 μm×a length in the fiber axis direction of 1 μm, on the surface thereof. Generally, the carbon fiber bundle has a form in which about 1000 to 50000 strands of single fibers having an average diameter of about 5 to 8 μm are combined.

The difference in height between a highest portion and a lowest portion in an area of a circumferential length of 2 μm×a length in the fiber axis direction of 1 μm is preferably 10% or less of the diameter of single fiber.

The depth of the wrinkles on the surface of a single fiber of the carbon fiber bundle is specified by the difference in height between a highest portion and a lowest portion in an area of a circumferential length of 2 μm×a length in the fiber axis direction of 1 μm. The wrinkles on the surface of a single fiber refer to concavities and convexities having a length of 1 μm or greater in a certain direction. The direction is not particularly limited, and may be parallel or vertical to the fiber axis direction or may form a certain angle in the fiber axis direction. In general methods of producing the carbon fiber bundle, the surface of a general carbon fiber includes wrinkles that are almost parallel to the fiber axis direction. The difference in height can be estimated based on a surface shape that is obtained by scanning the surface of a single fiber by using a scanning atomic force microscope (AFM).

The ratio between a major axis and a minor axis (major axis/minor axis) of a cross-section of the single fiber of the carbon fiber bundle is preferably 1.03 to 2.0, and particularly preferably 1.05 to 1.7. If the major axis/minor axis is smaller than 1.03, after the sizing treatment, single fibers strongly apply to each other due to the sizing agent, and spreadability of a resin with respect to the single fiber becomes poor when the single fiber is mixed or impregnated with a resin. Accordingly, a molded product that is evenly dispersed is not obtained in some cases. On the other hand, if the major axis/minor axis is greater than 2.0, adhesion between the single fibers is weak, and a carbon fiber bundle that

spreads easily is obtained. Consequently, stability of a cutting process for cutting in a predetermined length, or morphological stability of the cut carbon fiber bundle deteriorates in some cases.

Examples of the carbon fiber bundle having the plurality of single fibers include TR50S, TR30S, TRH50, TR40, MR60H (all product names), and the like manufactured by Mitsubishi Rayon Co., Ltd.

The single fiber constituting the carbon fiber bundle is obtained by making a pitch or the like obtained from an acrylonitrile polymer, petroleum, or coal into fiber and then carbonizing this fiber. As the carbon fiber bundle that has not been subjected to the sizing treatment using the sizing agent described later, it is possible to use a carbon fiber bundle having undergone a carbonizing treatment, a carbon fiber bundle in which an oxygen-containing functional group has been introduced to the surface thereof through an electro-oxidation treatment, or a carbon fiber bundle having undergone a pre-sizing treatment which will be described later in detail.

The carbon fiber bundle may be in a state of a continuous fiber or in a state where the carbon fiber bundle has been cut to a predetermined length. When the carbon fiber bundle is in a state of a continuous fiber, the basis weight thereof is preferably 0.2 to 15 g/m, more preferably 0.4 to 10 g/m, and particularly preferably 0.8 to 8 g/m. If the basis weight of the carbon fiber bundle is less than 0.2 g/m, this is economically disadvantageous. On the other hand, if the basis weight exceeds 15 g/m, it is difficult for the aqueous sizing agent dispersion to completely permeate the carbon fiber bundle, and a carbon fiber bundle having a stabilized shape is not easily produced in some cases. Moreover, when a carbon fiber-containing resin pellet is produced using the carbon fiber bundle of the present invention (pellet production process), the carbon fiber bundle is not evenly impregnated with the resin in a resin impregnation tank, and some portions of the carbon fiber bundle are not impregnated in some cases.

Meanwhile, in a case of the carbon fiber bundle in a state where the carbon fiber bundle has been cut to a predetermined length, the basis weight thereof is preferably 0.4 to 15 g/m, more preferably 0.6 to 10 g/m, and particularly preferably 0.8 to 8 g/m. If the basis weight of the carbon fiber bundle is less than 0.4 g/m, this is economically disadvantageous, and the processability of the carbon fiber bundle in an introduction process in a pellet production process deteriorates in some cases. On the other hand, if the basis weight exceeds 15 g/m, it is difficult for the aqueous sizing agent dispersion to completely permeate the carbon fiber bundle, and a carbon fiber bundle having a stabilized shape is not easily produced in some cases.

The cutting method of the carbon fiber bundle is not particularly limited, and a rotary cutter method or the like is suitable. Moreover, the cutting length (length of the carbon fiber bundle) is preferably 2 to 30 mm, more preferably 4 to 24 mm, and particularly preferably 6 to 20 mm. In the rotary cutter method, the cutting length can be adjusted by adjusting tooth tip intervals of the device used.

When the carbon fiber bundle is cut in the rotary cutter method, cutting failure is caused if the thickness of the carbon fiber bundle is too large, the cutter fails to operate since the carbon fiber bundle is wound around the rotor, or a shape defect after cutting is caused. Therefore, a thin carbon fiber bundle is advantageous. In addition, when the carbon fiber bundle is a carbon fiber bundle of heavy basis weight in which the basis weight exceeds 1.5 g/m, it is important to cause the aqueous sizing agent dispersion to evenly apply even to the inside of the carbon fiber bundle, by opening the carbon fiber bundle as much as possible. Accordingly, it is preferable to control the width and thickness of the carbon fiber bundle to be increased using a guide roll, a comb guide, a spreader bar, or the like, and to apply such a roll, guide, or spreader bar such that the carbon fiber bundle substantially is not twisted.

Here, the carbon fiber bundle having been cut to a predetermined length easily cracks longitudinally along the fiber orientation direction if the width of the carbon fiber bundle widens, and the shape of the carbon fiber bundle tends not to be easily retained during the production or when the produced carbon fiber bundle is used. This phenomenon is particularly noticeable in the carbon fiber bundle of heavy basis weight. Accordingly, it is preferable to control the width of the carbon fiber bundle by adjusting the width of a guide attached to the rotary cutter, such that the ratio between the width and thickness (width/thickness) of the carbon fiber bundle becomes 3 to 10. If the width/thickness is 3 or greater, it is possible to inhibit a cutting mistake occurring in a cutting process using the rotary cutter. On the other hand, if the width/thickness exceeds 10, though a cutting mistake does not easily occur in cutting, the longitudinal cracking of the carbon fiber bundle easily occurs after cutting since the carbon fiber bundle becomes too thin, which leads to a concern that the processability will deteriorate in the subsequent processes. In addition, if the carbon fiber bundle of heavy basis weight is cut by being thinly stretched similarly to a general-purpose carbon fiber bundle, the number of carbon fiber strands that can be treated simultaneously is reduced. Accordingly, in order to make up the reduced fraction, it is necessary to widen the width of the cutter or increase the treatment speed, which leads to a concern of a load applied to facilities and decrease in production efficiency.

In cutting the carbon fiber bundle, it is preferable to cause the aqueous sizing agent dispersion to apply to the carbon fiber bundle and then cut the carbon fiber bundle in a moist state. This utilizes a converging effect resulting from the surface tension of the aqueous sizing agent dispersion and is for preventing the longitudinal cracking by absorbing an impactive shearing force caused in cutting in a moist and flexible state. The cutting is preferably performed in a moist state in which the moisture content of the carbon fiber bundle is preferably 20 to 60% by mass, and particularly preferably 25 to 50% by mass. If the moisture content is less than 20% by mass, there is a concern that the longitudinal cracking

or fluff will easily occur during cutting. If the moisture content exceeds 60% by mass, there is a concern that since excessive water applies to the surface of single fiber, the single fibers will converge round due to the surface tension of water, and that the cutting mistake or blade clogging will more frequently occur during cutting. In addition, if necessary, in order to adjust the moisture content, an additional treatment may be performed by using the aqueous sizing agent dispersion before cutting.

Examples of the method of drying the carbon fiber bundle after cutting include hot-air drying. When the hot-air drying is employed, in order to enhance a moisture-evaporating effect and prevent the adhesion between the carbon fiber bundles, it is preferable to dry the carbon fiber bundle while transporting the bundle under vibration. If the vibration in drying is too strong, fiber cracking easily occurs, and the proportion of carbon fiber bundle in which the ratio between a width and a thickness (width/thickness) of the carbon fiber bundle is less than 3 increases. In addition, if the vibration is too weak, pseudo-adhesion occurs between fibers to make a ball shape. Therefore, it is necessary to set appropriate vibration conditions. Moreover, not only to shake off the fragmented carbon fiber bundles, but also to facilitate the flow of hot air, it is more preferable to perform drying with vibration while transporting the carbon fiber bundle on a mesh vibration plate. It is also possible to use assisting means such as infrared radiation concurrently to improve drying efficiency.

<Production Method>

The carbon fiber bundle of the present invention is obtained by causing 0.2 to 5.0% by mass of the compound (a) to apply to the surface of the carbon fiber bundle described above.

In the present invention, after the compound (a) applies to the carbon fiber bundle, it is preferable to perform a heat treatment at 200 to 300°C for 5 seconds to 3 minutes. By performing this heat treatment, the compound (a) having applied to the surface of the carbon fiber bundle undergoes mild heat decomposition, whereby the compound (a) is more firmly bonded to the surface of the carbon fiber bundle. Consequently, the coupling action between the carbon fiber bundle and a matrix resin caused by the compound (a) is improved, whereby it is possible to obtain a carbon fiber bundle that exhibits superior interface adhesion to a matrix resin, particularly to an olefin resin.

The heat treatment time is preferably 5 seconds to 3 minutes. If the heat treatment time is shorter than 5 seconds, there is a concern that the heat decomposition described above will be insufficient, and the coupling action-improving effect is not easily obtained in some cases. On the other hand, if the heat treatment time exceeds 3 minutes, excessive heat decomposition occurs. Accordingly, the molecular weight is markedly reduced and the applying matter is appreciably decomposed and scattered, which leads to a concern of the deterioration of the coupling action.

The heat treatment conditions are more preferably 200 to 300°C for 5 seconds to 3 minutes, even more preferably at 200 to 260°C for 15 seconds to 3 minutes, and particularly preferably at 220 to 240°C for 20 to 40 seconds.

In performing the heat treatment, a hot-air drier, a panel heater drier, a muffle furnace, a roll drier, and the like can be used. As the heat treatment method, it is possible to consecutively pass the carbon fiber bundle through the drier described above, and it is also possible to wind the carbon fiber bundle around a tubular substance and to subject this carbon fiber bundle to a batch treatment by using a hot-air drier or a panel drier. A preferable heat treatment method is the consecutive treatment that enables an even heat treatment.

The atmosphere of the heat treatment is not particularly limited, and the heat treatment can be performed in the air, nitrogen, or inert gas.

When the compound (a) is caused to apply to the carbon fiber bundle, a method (sizing treatment) is preferable in which an aqueous sizing agent dispersion that is obtained by dissolving or dispersing only the compound (a) as a sizing agent or the compound (a) with another sizing agent in water is prepared, and this aqueous sizing agent dispersion is caused to apply to the carbon fiber bundle. Due to the sizing treatment, the convergence of the carbon fiber bundle can be improved, and the affinity of the obtained carbon fiber bundle with a matrix resin can also be improved.

The amount of the applying compound (a) can be adjusted by adjusting the solid content concentration of the aqueous sizing agent dispersion, as described above.

After the aqueous sizing agent dispersion applies to the surface of the carbon fiber bundle due to the sizing treatment, it is preferable to perform a drying treatment and then a heat treatment. By performing the drying treatment, the moisture in the aqueous sizing agent dispersion having applied to the carbon fiber bundle can be evaporated before the heat treatment, whereby it is possible to inhibit the heat decomposition product of the compound (a) from being scattered together with the moisture. Accordingly, by performing the drying treatment before the heat treatment, it is possible to cause the compound (a) to more firmly and stably apply to the surface of the carbon fiber bundle. Any method can be used as the drying treatment method as long as the moisture in the aqueous sizing agent dispersion having applied to the carbon fiber bundle can be evaporated before the heat treatment in the method. The drying treatment can also be performed at 100 to 200°C.

The concentration of the aqueous sizing agent dispersion is not particularly limited, but preferably, the sizing agent is diluted in water so as to yield the concentration of the sizing agent of 5 to 60% by mass.

The aqueous sizing agent dispersion may contain, as an auxiliary component, an olefin thermoplastic elastomer resin. The olefin thermoplastic elastomer resin imparts sufficient convergence and a draping property to the carbon fiber bundle, and can secure sufficient affinity with a matrix resin such as a polyolefin resin.

Examples of the olefin thermoplastic elastomer resin include a hydrogenated styrene thermoplastic elastomer, an ethylene propylene diene monomer copolymer, and the like.

A Vicat softening point measured based on ASTM D1525-70 of the olefin thermoplastic elastomer is preferably 120°C or lower, more preferably 110°C or lower, and particularly preferably 90°C or lower. This is because when the process (drying treatment) in which the aqueous sizing agent dispersion is caused to apply to the surface of a single fiber of the carbon fiber bundle and then moisture is evaporated is performed at 100 to 200°C, if the olefin thermoplastic elastomer resin has been sufficiently softened, the convergence of the carbon fiber bundle obtained having undergone drying becomes excellent.

The compound (a) and the olefin thermoplastic elastomer play important roles as described above. Therefore, in order to cause them to more effectively play the role, a minimum amount of the contained compound (a) and the elastomer is independently determined, which is preferably 15/1 to 1/1 in terms of a mass ratio (compound (a)/ olefin thermoplastic elastomer).

For the sizing treatment, in consideration of industrial production, it is preferable to use an aqueous emulsion obtained by dispersing a sizing agent in water, in view of safety and economics. In this case, for the purpose of evenly dispersing constituent components in water, a surfactant is used as an emulsifier.

The emulsifier is not particularly limited, and it is possible to use an anionic emulsifier, a cationic emulsifier, a nonionic emulsifier, and the like. Among these, an anionic or nonionic emulsifier is preferable in terms of an emulsification performance and a low cost. In addition, as described later, when a silane-coupling agent is added to the aqueous emulsion, a nonionic emulsifier is particularly preferable in terms of the stability of the silane-coupling agent in water and the stability of physical properties of the molded product.

Examples of the nonionic emulsifier include polyethylene glycol type emulsifiers (a higher alcohol ethylene oxide adduct, an alkylphenol ethylene oxide adduct, a fatty acid ethylene oxide adduct, a polypropylene glycol ethylene oxide adduct, and the like), and polyhydric alcohol type emulsifiers (fatty acid ester of glycerin, sorbitol fatty acid ester, fatty acid alkanolamide, and the like). Here, an HLB of the nonionic emulsifier used is generally 8 to 20. If a nonionic emulsifier having an HLB outside this range is used, a stabilized aqueous emulsion is not obtained in some cases.

Examples of the anionic emulsifier include carboxylic acid salt type emulsifiers (potassium oleate, sodium oleate, and the like), sulfonic acid salt type emulsifiers (sodium dodecylbenzene sulfonate, ammonium dodecylbenzene sulfonate, dioctyl sodium sulfosuccinate, and the like), and sulfuric acid ester salt type emulsifiers (sodium lauryl sulfate, ammonium lauryl sulfate, and the like).

Examples of the emulsification method include a method of using a batch provided with a stirring blade, a method of using a ball mill, a method of using a shaker, a method of using a high shearing force emulsification device such as a Gaulin homogenizer, and the like.

The emulsifier described above is not particularly limited as long as the emulsifier can emulsify the sizing agent. Generally, the emulsifier is added at about 5 to 30% by mass.

If necessary, the aqueous emulsion in which a sizing agent is dispersed may contain another sizing agent emulsion (for example, a vinyl acetate resin emulsion, a urethane resin emulsion, an acrylic resin emulsion, an epoxy resin emulsion, or the like), a silane-coupling agent, and an antistatic agent. The aqueous emulsion may further contain a lubricant or a smoothing agent.

As the silane-coupling agent, for example, a silane-coupling agent having any one of an epoxy group, a vinyl group, an amino group, a methacryl group, an acryl group, and a linear alkyl group in a molecule can be used. The silane-coupling agent may be used alone, or as a mixture of two or more kinds thereof. Among the silane-coupling agents, an epoxy silane-coupling agent, an amino silane-coupling agent, and a linear alkyl silane-coupling agent having an epoxy group, an amino group, and a linear alkyl group in a molecule are particularly suitable.

As the epoxy group of the epoxy silane-coupling agent, a glycidyl group, an alicyclic epoxy group, and the like are suitable. Specific examples of such a silane-coupling agent include A-186, A-187, AZ-6137, AZ-6165 (all product names), and the like manufactured by Nippon Unicar Company Limited.

Examples of the amino silane-coupling agent include amino silane-coupling agents having either primary amine or secondary amine groups or having both of these. Specific examples of such an amino silane-coupling agent include A-1100, A-1110, A-1120, Y-9669, A-1160 (all product names), and the like manufactured by Nippon Unicar Company Limited.

Examples of the linear alkyl group of the linear alkyl silane-coupling agent include linear alkyl groups having a hexyl group, an octyl group, and a decyl group. Specific examples of such a silane-coupling agent include AZ-6171 and AZ-6177 (all product names) manufactured by Nippon Unicar Company Limited., KBM-3103C (product name) manufactured by Shin-Etsu Silicones, and the like.

The amount of the silane-coupling agent added is preferably 5% by mass or less, and more preferably 4% by

mass or less, based on 100% by mass of the total component amount (total solid content amount) of the aqueous emulsion (excluding water) in which a sizing agent is dispersed. If the added amount exceeds 5% by mass, crosslinking of the silane-coupling agent occurs, and the carbon fiber bundle is stiffened and weakened, whereby the longitudinal cracking easily occurs. In addition, there is a concern that the interface adhesion will deteriorate due to the above phenomena.

Examples of the method of performing the sizing treatment by using the aqueous sizing agent dispersion include a method of bringing the carbon fiber bundle into contact with the aqueous sizing agent dispersion. Specific examples of the method include a touch roll method in which a portion of a roll is dipped in the aqueous sizing agent dispersion to perform surface transfer, and then the roll is brought into contact with a carbon fiber bundle formed of single fibers so as to cause the aqueous sizing agent dispersion to apply; a dipping method in which a carbon fiber bundle formed of single fibers is directly dipped in the aqueous sizing agent dispersion, and then caused to pass through a nip roll if necessary so as to control the amount of applying aqueous sizing agent dispersion; and the like.

In addition, in a case of the touch roll method, a method of causing the aqueous sizing agent dispersion to apply in a plurality of stages by bringing the carbon fiber bundle into contact with a plurality of touch rolls is particularly preferable, with respect to the amount of the applying sizing agent and bundle width control.

After the sizing treatment, it is preferable to perform the drying treatment and heat treatment in order as described above.

In the present invention, before the sizing treatment, a pre-sizing treatment may be performed on the carbon fiber bundle by using a pre-sizing agent.

The pre-sizing treatment in the present invention refers to a treatment for causing a pre-sizing agent to apply to the carbon fiber bundle. By this pre-sizing treatment, the convergence of the carbon fiber bundle can be improved, and the affinity of the sizing agent described above with the carbon fiber bundle can also be improved.

As the pre-sizing agent, a pre-sizing agent formed of an epoxy resin can be used. Such a pre-sizing agent is suitable since this agent has excellent affinity with the single fiber of the carbon fiber bundle and handleability, and a small amount of this agent can cause the single fibers to converge. Moreover, the carbon fiber bundle having undergone the pre-sizing treatment using such a pre-sizing agent acquires excellent processability in which the carbon fiber bundle is not wound around the roll in the subsequent sizing treatment, for example. In addition, by the pre-sizing agent treatment, the wettability with respect to the sizing agent becomes excellent, and it is possible to cause the sizing agent to evenly apply.

When the pre-sizing treatment is performed on the carbon fiber bundle by using the pre-sizing agent, an aqueous pre-sizing agent solution obtained by dissolving or dispersing a water-soluble or water-dispersible epoxy resin in water is generally used.

The water-soluble or water-dispersible epoxy resin is not particularly limited, and well-known epoxy resins can be used. It is also possible to use a modified epoxy resin as long as this resin is usable in a water system. The epoxy resin may be used alone, or as a mixture of two or more kinds thereof. With respect to the processability in the sizing treatment process described above, it is more preferable to concurrently use an epoxy resin remaining a liquid and an epoxy resin remaining a solid at room temperature, as the epoxy resin.

Examples of the water-soluble epoxy resin include an epoxy resin having a glycidyl group in both ends of an ethylene glycol chain, an epoxy resin in which ethylene oxide is added to both ends of bisphenol A, F, or S and both ends have a glycidyl group, and the like. In addition, an epoxy resin having an alicyclic epoxy group instead of a glycidyl group can also be used.

Examples of the water-dispersible epoxy resin include a bisphenol A epoxy resin, a bisphenol F epoxy resin, a bisphenol S epoxy resin, a phenol novolac epoxy resin, a cresol novolac epoxy resin, a biphenyl epoxy resin, an epoxy resin having a naphthalene skeleton, an aliphatic epoxy resin, a dicyclopentadiene epoxy resin (for example, HP7200 (product name) manufactured by DIC Corporation), a glycidyl amine epoxy resin, a DDP novolac epoxy resin (for example, Epikote 157S65 (product name) manufactured by Japan Epoxy Resins Co., Ltd.), and the like. In addition, an epoxy resin having an alicyclic epoxy group instead of a glycidyl group can also be used.

When the pre-sizing agent formed of a water-dispersible epoxy resin is used, it is preferable to perform the pre-sizing treatment by using an aqueous emulsion to which an emulsifier has been further added. The emulsifier is not particularly limited, and for example, anionic, cationic, and nonionic emulsifiers can be used. Among these, anionic or nonionic emulsifiers are preferable since these emulsifiers exhibit an excellent emulsification performance and are inexpensive. Moreover, nonionic emulsifiers are particularly preferable since these emulsifiers do not hinder the stability of the sizing agent.

The amount of the pre-sizing agent applying to the carbon fiber bundle by the pre-sizing treatment is preferably 0.1 to 2.0% by mass, and more preferably 0.2 to 1.2% by mass, based on the total carbon fiber bundle. If the amount of the applying pre-sizing agent is in this range, about 1 to 3 molecular layers of the pre-sizing agent cover the surface of a single fiber of the carbon fiber bundle, which is thus suitable. If the applying amount is less than 0.1% by mass, the effect of causing the pre-sizing agent to apply is not exhibited, and the carbon fiber bundle that is excellent in processability,

handleability, and affinity with a sizing agent cannot be obtained in some cases. On the other hand, if the applying amount exceeds 2.0% by mass, bridging is caused since the pre-sizing agent is interposed between single fibers. Therefore, due to pseudo-adhesion between the single fibers, the movement between the single fibers is restricted, and spreadability of the carbon fiber bundle easily deteriorates. Consequently, there is a concern that the uniformity of the carbon fiber bundle will be impaired. Moreover, there is also a concern that properties of the carbon fiber bundle will deteriorate such that a uniform carbon fiber bundle is not easily obtained since the permeability of the sizing agent which is caused to apply in the subsequent sizing treatment is hindered, for example.

According to the method of producing the carbon fiber bundle of the present invention, a carbon fiber bundle to which 0.2 to 5.0% by mass of an amino group-containing modified polyolefin resin (compound (a)) applies is obtained.

The compound (a) is a component serving as an effective coupling agent of which an amino group in a molecule thereof enhances the interaction between the compound (a) and the surface of the carbon fiber bundle, and a polyolefin chain of the skeleton thereof forms a strong bond with a matrix resin such as a polyolefin resin, particularly with a polypropylene resin by the entanglement of molecules. Accordingly, the carbon fiber bundle of the present invention in which 0.2 to 5% by mass of the compound (a) applies to the surface of the carbon fiber bundle can exhibit excellent interface adhesion to a matrix resin such as a polyolefin resin and is suitable for being combined with the matrix resin.

Particularly, if a carbon fiber bundle, which is obtained by causing 0.2 to 5% by mass of the compound (a) to apply to the surface of a carbon fiber bundle and then performing a heat treatment at 200 to 300°C for 5 seconds to 3 minutes, is combined with a matrix resin, a thermoplastic resin composition that is superior in bending strength, impact strength, and flexural modulus is obtained.

<Thermoplastic Resin Composition>

A thermoplastic resin composition is obtained by kneading the carbon fiber bundle of the present invention in a thermoplastic resin to be a matrix resin. For kneading the carbon fiber bundle in a thermoplastic resin, it is preferable to provide continuous carbon fiber bundles or carbon fiber bundles cut to a predetermined length to an extruder and make a pellet by kneading the carbon fiber bundle with a thermoplastic resin.

In addition, the thermoplastic resin composition can provide molded products (carbon fiber-reinforced composite molded products) of arbitrary shapes by being molded in a known molding method such as injection molding.

For preparing a thermoplastic resin composition, the carbon fiber bundle of the present invention is mixed with a thermoplastic resin such that the amount of the mixed carbon fiber bundle of the present invention becomes preferably 3 to 60% by mass, and more preferably 5 to 50% by mass, based on 100% by mass of the thermoplastic resin composition. If the amount of the mixed carbon fiber bundle is less than 3% by mass, there is a concern that the mechanical properties-improving effect of the molded product will be insufficient. If the amount of the mixed carbon fiber bundle exceeds 60% by mass, a more marked improving effect is not obtained. Furthermore, process stability in producing a pellet deteriorates, and spots are formed in the pellet, which leads to a concern of the deterioration of quality stability of the molded product.

A matrix resin used for being combined with the carbon fiber bundle of the present invention is not particularly limited. However, with respect to the affinity of the matrix resin with a sizing agent (particularly, the compound (a)) having applied to the surface of a single fiber of the carbon fiber bundle, polyolefin resins such as polypropylene and polyethylene are optimal. Moreover, in addition to such a resin, at least one kind of resin selected from the group consisting of a polycarbonate resin, an ABS resin, an AS resin, a polyoxymethylene resin, a nylon resin, a polyphenylene sulfide resin, a polyethersulfine resin, a polyetherimide resin, a polyester resin, and an alloy resin of these resins may be used. Particularly, when the polyolefin resin is used as a matrix resin, for the purpose of further improving mechanical properties, various modified polyolefin resins may be added in a small amount. In addition, as a matrix resin, a thermosetting resin may be concurrently used.

As the modified polyolefin resin, acid-modified polyolefin which is obtained by mixing polyolefin with a radical initiator, unsaturated carboxylic acid and/or an anhydride thereof and melting and kneading the mixture can be used. As the polyolefin, polypropylene is preferable.

As the unsaturated carboxylic acid, maleic acid is preferable. The amount of the unsaturated carboxylic acid and/or the anhydride thereof contained is preferably 0.1 to 10% by weight.

The thermoplastic resin composition obtained in the above manner contains the carbon fiber bundle of the present invention. Accordingly, this thermoplastic resin composition is excellent in bending strength, impact strength, and flexural modulus.

## Examples

Hereinafter, the present invention will be described in detail based on examples, but the present invention is not limited to the examples.

Measurement and evaluation of various properties in the present examples were carried out by the following

methods.

(1) Measurement of wrinkle depth of surface of single fiber of carbon fiber bundle

The depth of wrinkles on the surface of a single fiber of the carbon fiber bundle is specified by a difference in height between a highest portion and a lowest portion in an area of a circumferential length of 2 μm×a length in the fiber axis direction of 1 μm. The difference in height was measured based on a surface shape that is obtained by scanning the surface of a single fiber by using a scanning atomic force microscope (AFM). Specifically, the measurement was performed in the following manner.

Several strands of single fibers of the carbon fiber bundle were placed on a stage, both ends thereof were fixed, and Dotite was applied around the fibers, thereby preparing a sample for measurement. By using an atomic force microscope (manufactured by Seiko Instruments Inc., "SPI3700/SPA-300 (product name)") and a cantilever made of silicon nitride, a range of 2 to 7 μm in a circumferential direction of the single fiber was repeatedly scanned in an AFM mode, while the fiber was moved little by little over a 1-μm length in the fiber axis direction. Low-frequency components of the obtained image of measurement were cut by two-dimensional Fourier transform, followed by inverse transform. From the thus obtained cross-sectional planar image from which the curvature of the single fiber has been removed, a difference in height between a highest portion and a lowest portion in an area of a circumferential length of 2 μm×a length in the fiber axis direction of 1 μm was read and evaluated.

(2) Calculation of ratio between major axis and minor axis (major axis/minor axis) of cross-section of single fiber of carbon fiber bundle

A carbon fiber bundle for measurement was passed through a tube having an inner diameter of 1 mm and made of a vinyl chloride resin, and then was cut with a knife into round slices, thereby obtaining samples.

Thereafter, the sample was applied to an SEM stage in a state where the cross-section of the sample faced upward, and sputtering was performed using Au at a thickness of about 10 nm. Subsequently, the cross-section was observed using a scanning electron microscope (manufactured by Philips, "XL20 (product name)") under conditions of an accelerating voltage of 7.00 kV and an operating distance of 31 mm. In this manner, the major axis and minor axis of the cross-section of the single fiber were measured and evaluated.

(3) Measurement of strand strength and strand elasticity

The strand strength and strand elasticity were measured based on JIS R7608.

(4) Measurement of amount of applying pre-sizing agent

Based on JIS R7604, the amount of the pre-sizing agent applying to the carbon fiber bundle having undergone the pre-sizing treatment was measured by a Soxhlet extraction method using methyl ethyl ketone.

(5) Measurement of amount of applying sizing agent

By the heat decomposition method based on SRM14-90 of a SACMA method, the total amount of the sizing agent having applied to the carbon fiber bundle was measured from a mass difference before and after the heat decomposition treatment, and the applying amount was calculated from the following Formula (1) as a ratio of the sizing agent applying to the carbon fiber bundle before the heat decomposition treatment.

Here, when the compound (a) and other components had been concurrently used as the sizing agent, the amount of the applying compound (a) was calculated by using a mass ratio of the contained compound (a) to the total solid contents in the aqueous sizing agent dispersion. In addition, when the pre-sizing treatment had been performed prior to the sizing treatment, the increment with respect to the amount of the applying pre-sizing agent was calculated as the total amount of the sizing agent, and the applying amount was calculated from the following Formula (1).

$$\text{Applying amount (\%)} = 100 \times (W1 - W2)/W1 \cdots (1)$$

W1: mass of carbon fiber before heat decomposition treatment
W2: mass of carbon fiber after heat decomposition treatment

(6) Measurement of moisture content

The carbon fiber bundle that had been cut to a predetermined length was dried at 110°C for 1 hour, and change in mass before and after the drying was taken as a moisture content.

(7) Measurement of limiting viscosity [η]

The limiting viscosity [η] of an amino group-containing modified polyolefin resin was measured using an automatic viscometer (manufactured by RIGO, CO., LTD., "VNR-53 model"). For a solvent, tetralin to which 1 g/L of 2,6-di-t-butyl-4-methylphenol (hereinafter, referred to as BHT) had been added as an antioxidant was used. The limiting viscosity was measured by a Ubbelohde type capillary viscometer under conditions of a measurement temperature of 135°C and a sample concentration of 0.8 to 1.6 g/L.

(8) Measurement of amino group content

The amino group content of the amino group-containing modified polyolefin resin was measured based on the method disclosed in Macromolecules, Vol. 26, pp 2087-2088, (1993).
First, 1.0 g of amino group-containing modified polyolefin, 50 mL of p-xylene, 10 mL of pyridine, and 5 mL of benzoyl chloride were introduced to a 200 mL two-necked eggplant-shaped flask, followed by stirring under heating at 140°C for 6 hours in a nitrogen atmosphere, thereby obtaining a polymer solution.
Thereafter, the obtained polymer solution was added to 1 L of methanol and sufficiently stirred, and the precipitated solid fraction (polymer) was recovered through filtering. Subsequently, the polymer was washed with methanol several times, followed by vacuum drying at 80°C for 6 hours. The thus obtained polymer was molded by press molding at 190°C, and an infrared absorption spectrum thereof was measured.
For quantitating the amino group, an absorbency ratio between absorption (1645 $cm^{-1}$) of a carbonyl group (C=O) generated from a reaction between an amino group and benzoyl chloride and an absorption band specific to polyolefin was used. During quantitation, a standard curve was used which was created from the infrared absorption spectrum of a blend (190°C, press molding product) of polyolefin powder and various amounts of 1-butyl(2-methylpropyl)benzamide.

(9) Measurement of melt flow rate (MFR)

Melt flow rate was measured based on JIS K 7210 under conditions of a temperature of 230°C and a load of 2.16 kg.

(10) Evaluation of tensile breaking stress

Tensile breaking stress was measured according to JIS K 7161.

(11) Evaluation of bending strength and flexural modulus

Bending strength and flexural modulus was measured according to JIS K 7171.

(12) Evaluation of Charpy impact strength

Charpy impact strength was measured according to JIS K 7111.

<Production of Amino Group-Containing Modified Polyolefin Resin>

(Compound (a-1))

Preparation of Partially Neutralized p-Toluenesulfonic Acid Salt of Ethylenediamine;

Methanol (1.5 L) and 475 g (2.5 mol) of p-toluenesulfonic acid monohydrate were introduced to a separable flask having an internal volume of 5 L and provided with a thermometer, a stirrer, a dropping funnel, and a reflux condenser, followed by dissolving. While this mixture was cooled in an ice bath, a solution obtained by dissolving 750 g (12.5 mol) of ethylenediamine in 1.5 L of methanol was added dropwise to the mixture at such a rate that kept the temperature at 10 to 20°C. After the dropwise addition ended, the mixture was heated at 70°C, and methanol and unreacted ethylenediamine were distilled away under reduced pressure. In this manner, 663 g of a white solid was precipitated.

The obtained white solid was collected and made into a form of slurry by using 1.5 L of toluene, followed by filtering. The resultant was washed twice with 0.5 L of toluene, and the obtained white powder was dried under reduced pressure. The yield was 540 g. When the white powder was titrated with 0.5 N hydrochloric acid by using bromophenol blue as an indicator, the result was $4.21\times10^{-3}$ eq/g. Therefore, the white powder was confirmed as a neutralized salt of ethylenediamine p-toluenesulfonate.

Preparation of Compound (a-1);

p-Xylene (3 L) and 500 g of an ethylene-ethyl acrylate-maleic anhydride (mass ratio: 67.8/29.1/3.1) copolymer (mass average molecular weight: Mw=50000, number average molecular weight: 20000) were introduced to a separable flask having an internal volume of 5 L and provided with a thermometer, a stirrer, a dropping funnel, and a Dean-Stark water separator, and the mixture was dissolved by heating at 140 °C under p-xylene reflux in an oil bath.

Thereafter, 390 g of a 1,3-dimethyl-2-imidazolidinone (DMI) solution containing 75.0 g of the partially neutralized p-toluenesulfonic acid salt of ethylenediamine prepared above was slowly added dropwise thereto for 3 hours. In the meantime, the reaction mixture was kept at this temperature under p-xylene reflux, and water generated and undergoing azeotropy as a result of imidization was removed outside the system by using the Dean-Stark water separator.

The reaction was continued for 10 hours from when the partially neutralized diamine salt had started to be added dropwise, followed by cooling. The reaction mixture was introduced to 25 L of methanol, and the product was recovered as a precipitate. This precipitate was dipped overnight in a water/methanol (volume ratio of 1/1) solution containing 30 g of potassium carbonate, followed by filtering, and washed sufficiently with water and methanol. Subsequently, the resultant was dried, thereby obtaining a compound (a-1). The yield was 500 g.

A portion of the thus obtained compound (a-1) was molded by press molding at 190°C, and an infrared absorption spectrum thereof was measured. As a result, absorption of an amino group was observed at 3400 $cm^{-1}$, and absorption based on an imide ring was observed at 1775 $cm^{-1}$ and 1695 $cm^{-1}$. Accordingly, it was confirmed that a target amino group-containing modified polyolefin resin had been obtained.

In addition, the limiting viscosity (measured in tetralin at 135°C) of the obtained compound (a-1) was 0.3 dL/g, and the amino group content was 1.0 mol%.

(Compound (a-2))

p-Xylene (3 L) and 500 g of maleic anhydride grafted polyethylene (manufactured by Sanyo Chemical Industries, Ltd, product name; YOUMEX 2000, maleic anhydride content of 5.2% by mass, mass average molecular weight of 16000, number average molecular weight of 4000) were introduced to a separable flask having an internal volume of 5 L and provided with a thermometer, a stirrer, a dropping funnel, and a Dean-Stark water separator, and the mixture was dissolved by heating at 140 °C under p-xylene reflux in an oil bath.

Thereafter, 390 g of a DMI solution containing 75.0 g of the partially neutralized p-toluenesulfonic acid salt of ethylenediamine prepared in the production of compound (a-1) was slowly added dropwise thereto for 3 hours.

In the meantime, the reaction mixture was kept at this temperature under p-xylene reflux, and water generated and undergoing azeotropy as a result of imidization was removed outside the system by using the Dean-Stark water separator. The reaction was continued for 10 hours from when the partially neutralized diamine salt had started to be added dropwise, followed by cooling. The reaction mixture was introduced to 25 L of methanol, and the product was recovered as a precipitate. This precipitate was dipped overnight in a water/methanol (volume ratio of 1/1) solution containing 30 g of potassium carbonate, followed by filtering, and washed sufficiently with water and methanol. Subsequently, the resultant was dried, thereby obtaining a compound (a-2). The yield was 500 g.

A portion of the thus obtained compound (a-2) was molded by press molding at 190°C, and an infrared absorption spectrum thereof was measured. As a result, absorption of an amino group was observed at 3400 $cm^{-1}$, and absorption based on an imide ring was observed at 1775 $cm^{-1}$ and 1695 $cm^{-1}$. Accordingly, it was confirmed that a target amino group-containing modified polyolefin resin had been obtained.

In addition, the limiting viscosity (measured in tetralin at 135°C) of the obtained compound (a-2) was 0.24 dL/g, and the amino group content was 1.5 mol%.

(Compound (a-3))

p-xylene (3 L) and 500 g of maleic anhydride grafted polypropylene (manufactured by Sanyo Chemical Industries, Ltd, product name; YOUMEX 1001, maleic anhydride content of 2.5% by mass, mass average molecular weight of 15000, number average molecular weight of 5500) were introduced to a separable flask having an internal volume of 5 L and provided with a thermometer, a stirrer, a dropping funnel, and a Dean-Stark water separator, and the mixture

was dissolved by heating at 140 °C under p-xylene reflux in an oil bath.

Thereafter, 390 g of a DMI solution containing 75.0 g of the partially neutralized p-toluenesulfonic acid salt of ethylenediamine prepared in the production of compound (a-1) was slowly added dropwise thereto for 3 hours.

In the meantime, the reaction mixture was kept at this temperature under p-xylene reflux, and water generated and undergoing azeotropy as a result of imidization was removed outside the system by using the Dean-Stark water separator. The reaction was continued for 10 hours from when the partially neutralized diamine salt had started to be added dropwise, followed by cooling. The reaction mixture was introduced to 25 L of methanol, and the product was recovered as a precipitate. This precipitate was dipped overnight in a water/methanol (volume ratio of 1/1) solution containing 30 g of potassium carbonate, followed by filtering, and washed sufficiently with water and methanol. Subsequently, the resultant was dried, thereby obtaining a compound (a-3). The yield was 500 g.

A portion of the thus obtained compound (a-3) was molded by press molding at 190°C, and an infrared absorption spectrum thereof was measured. As a result, absorption of an amino group was observed at 3400 $cm^{-1}$, and absorption based on an imide ring was observed at 1775 $cm^{-1}$ and 1695 $cm^{-1}$. Accordingly, it was confirmed that a target amino group-containing modified polyolefin resin had been obtained.

In addition, the limiting viscosity (measured in tetralin at 135°C) of the obtained compound (a-3) was 0.33 dL/g, and the amino group content was 0.95 mol%.

<Preparation of Aqueous Sizing Agent Dispersion >

By using the respective amino group-containing modified polyolefin resins (compounds (a-1) to (a-3)) obtained as above, aqueous sizing agent dispersions were prepared in the following manner.

First, the amino group-containing modified polyolefin resin, which is a main component of a sizing agent, was crushed into powder having a particle size of 20 μm or less, and mixed with a nonionic surfactant (manufactured by ADEKA CORPORATION, "Pluronic F108 (product name)" in a mass ratio (powder/surfactant) of 80/20, thereby preparing a sizing agent. The sizing agent was dispersed in water by a homogenizer including a high shear stirring blade so as to yield a concentration of 35% by mass. Subsequently, the dispersion was passed three times through an ultra high pressure homogenizer (manufactured by Mizuho Industrial Co., Ltd., "Microfluidizer M-110-E/H"), thereby obtaining a stabilized aqueous emulsion (aqueous sizing agent dispersion).

In the obtained aqueous sizing agent dispersion, the concentration of the sizing agent was 34% by mass, and an average particle size thereof was 0.2 μm.

<Physical Properties of Carbon Fiber Bundle>

As carbon fiber bundles, carbon fiber bundles (manufactured by Mitsubishi Rayon Co., Ltd., "TR50S-15L", "TR50S-50L", and "TR40-12L", all of which had not undergone presizing treatment) produced from polyacryl fiber as a raw material were used. The physical properties of the respective carbon fiber bundles are shown in Table 1.

[Table 1]

| Carbon fiber bundle (raw material) | TR50S-15L | TR50S-50L | TR40-12L |
|---|---|---|---|
| Wrinkle depth (nm) | 100 | 60 | 10 |
| Major axis/minor axis | 1.1 | 1.6 | 1.0 |
| Basis weight (g/m) | 1.0 | 3.3 | 0.8 |
| Filament number (strand) | 15,000 | 50,000 | 12,000 |
| Strand strength (MPa) | 4900 | 4800 | 4600 |
| Elastic modulus of strand (GPa) | 240 | 240 | 235 |

<Production of Carbon Fiber Bundle>

(Carbon Fiber Bundle (CF-1))

As a carbon fiber bundle, "TR50S-15L" was used.

The aqueous sizing agent dispersion prepared using the compound (a-1) as an amino group-containing modified polyolefin resin was diluted so as to yield a concentration of 2.0% by mass. The carbon fiber bundle was dipped in a dipping tank that was filled with the diluted solution and included a free roller. Thereafter, a hot-air drying treatment was

performed at 150°C for 1 minute, and then the carbon fiber bundle was wound around a bobbin, thereby obtaining a carbon fiber bundle (CF-1). The amount of the sizing agent applying to the obtained carbon fiber bundle (CF-1) is shown in Table 2.

(Carbon Fiber Bundle (CF-2))

In the above production of the carbon fiber bundle (CF-1), the carbon fiber bundle (CF-1) was taken from the carbon fiber bundle wound around the bobbin. This carbon fiber bundle was thermally treated in a muffle furnace at 230°C for 25 seconds and then wound around a bobbin again, thereby obtaining a carbon fiber bundle (CF-2). The heat treatment was performed in an air atmosphere. The amount of the sizing agent applying to the obtained carbon fiber bundle (CF-2) is shown in Table 2.

(Carbon Fiber Bundle (CF-3))

An aqueous sizing agent dispersion (concentration of 2.8% by mass) was prepared in the same method as that of the aqueous sizing agent dispersion described above, except that a maleic anhydride modified polypropylene resin (manufactured by TOYO KASEI CO., LTD., "H-1100P", limiting viscosity [η] measured in tetralin at 135°C: 0.58 dl/g, amount of contained maleic anhydride: 5.6% by mass) was used instead of the compound (a-1). A carbon fiber bundle (CF-3) was obtained in the same manner as in the production of the carbon fiber bundle (CF-1), except that the carbon fiber bundle (CF-3) was dipped in a dipping tank that was filled with the aqueous sizing agent dispersion described above and included a free roller. The amount of the sizing agent applying to the obtained carbon fiber bundle (CF-3) is shown in Table 2.

(Carbon Fiber Bundle (CF-4))

In the above production of the carbon fiber bundle (CF-3), the carbon fiber bundle (CF-3) was taken from the carbon fiber bundle wound around a bobbin. This carbon fiber bundle was thermally treated in a muffle furnace at 230°C for 25 seconds and then wound around a bobbin again, thereby obtaining a carbon fiber bundle (CF-4). The heat treatment was performed in an air atmosphere. The amount of the sizing agent applying to the obtained carbon fiber bundle (CF-4) is shown in Table 2 (the amount was 0.8 wt%).

(Carbon Fiber Bundle (CF-5))

A carbon fiber bundle (CF-5) was obtained in the same manner as in the production of the carbon fiber bundle (CF-1), except that the carbon fiber bundle (CF-5) was dipped in a dipping tank that was filled with an aqueous dispersion (concentration of 1.2% by mass) of a urethane resin (manufactured by DIC Corporation, "Hydran HW-930") and included a free roller. The amount of the sizing agent applying to the obtained carbon fiber bundle (CF-5) is shown in Table 2.

[Table 2]

| Carbon fiber bundle | | CF-1 | CF-2 | CF-3 | CF-4 | CF-5 |
|---|---|---|---|---|---|---|
| Carbon fiber bundle (raw material) | | TR50S-15L | TR50S-15L | TR50S-15L | TR50S-15L | TR50S-15L |
| Main component of sizing agent | | (a-1) | (a-1) | Maleic anhydride modified polypropylene | Maleic anhydride modified polypropylene | Urethane resin |
| Drying treatment temperature (°C) | | 150 | 150 | 150 | 150 | 150 |
| Heat treatment condition | Treatment temperature (°C) | N/A | 230 | N/A | 230 | N/A |
| | Treatment time (sec) | | 25 | | 25 | |
| Amount of applying sizing agent (% by mass) | | 0.6 | 0.6 | 0.8 | 0.8 | 0.4 |

<Examples 1 to 4 and Comparative Examples 1 to 3>

By using the carbon fiber bundles and matrix resins of such types and mixing amounts as shown in Table 3, carbon fiber-containing pellets were produced in the following manner.

In addition, the respective matrix resins shown in Table 3 are as follows.

PP-1: a polypropylene homopolymer (manufactured by Prime Polymer Co., Ltd., "J-3000GV", MFR=30 g/10 min)
PP-2: a polypropylene homopolymer (manufactured by Prime Polymer Co., Ltd., "H-50000", MFR=500 g/10 min)
MPP-1: maleic anhydride modified polypropylene (manufactured by TOYO KASEI CO., LTD., "H-1100P", limiting viscosity [$\eta$] measured in tetralin at 135°C: 0.58 dl/g, amount of contained maleic anhydride: 5.6 wt%)

(Production of Carbon Fiber-Containing Pellet)

First, PP-1, PP-2, and MPP-1 were mixed in the mixing amount shown in Table 3 and melted at 280°C, and the mixture was supplied into an impregnation tank in a die from an extruder.

Separately, the carbon fiber bundle of the mixing amount shown in Table 3 was preheated through a preheating portion at 200°C and then guided to the impregnation tank to which the above-described molten resin heated to 280°C was being supplied. The supply rate was adjusted to 10 m/min, and the carbon fiber bundle was transported into the die so as to be impregnated with the molten resin in the impregnation tank. The carbon fiber bundle was then taken out of the die, cooled, and cut with a pelletizer, thereby obtaining a carbon fiber-containing pellet having a length of 8 mm and a diameter of 2.2 mm.

(Evaluation of Carbon Fiber-Containing Pellet)

The obtained carbon fiber-containing pellet (100 parts by mass) was mixed with PP-1 as a diluent resin shown in Table 3, thereby producing a carbon fiber-reinforced polypropylene resin blend.

The obtained carbon fiber-reinforced polypropylene resin blend was molded by injection molding, thereby making test samples for measurement standards of the evaluation items described above. The mechanical performances (tensile breaking stress, bending strength, flexural modulus, and Charpy impact strength) of the test samples were evaluated, and the results are shown in Table 3.

[Table 3]

<table>
<tr><td colspan="3" rowspan="2"></td><td colspan="4">Example</td><td colspan="3">Comparative example</td></tr>
<tr><td>1</td><td>2</td><td>3</td><td>4</td><td>1</td><td>2</td><td>3</td></tr>
<tr><td rowspan="8">Carbon fiber-containing pellet</td><td rowspan="3">Matrix resin (% by mass)</td><td>PP-1</td><td>28</td><td>28</td><td>27</td><td>27</td><td>28</td><td>28</td><td>28</td></tr>
<tr><td>PP-2</td><td>28</td><td>28</td><td>27</td><td>27</td><td>28</td><td>28</td><td>28</td></tr>
<tr><td>MPP-1</td><td>4</td><td>4</td><td>6</td><td>6</td><td>4</td><td>4</td><td>4</td></tr>
<tr><td rowspan="5">Carbon fiber bundle (% by mass)</td><td>CF-1</td><td>40</td><td></td><td></td><td></td><td></td><td></td><td></td></tr>
<tr><td>CF-2</td><td></td><td>40</td><td>40</td><td>40</td><td></td><td></td><td></td></tr>
<tr><td>CF-3</td><td></td><td></td><td></td><td></td><td>40</td><td></td><td></td></tr>
<tr><td>CF-4</td><td></td><td></td><td></td><td></td><td></td><td></td><td>40</td></tr>
<tr><td>CF-5</td><td></td><td></td><td></td><td></td><td></td><td>40</td><td></td></tr>
<tr><td rowspan="2">Carbon fiber-reinforced polypropylene resin blend</td><td colspan="2">Diluent resin (PP-1) (parts by mass)</td><td>100</td><td>100</td><td>100</td><td>33</td><td>100</td><td>100</td><td>100</td></tr>
<tr><td colspan="2">Amount of carbon fiber in resin blend (% by mass)</td><td>20</td><td>20</td><td>20</td><td>30</td><td>20</td><td>20</td><td>20</td></tr>
</table>

(continued)

| | | Example | | | | Comparative example | | |
|---|---|---|---|---|---|---|---|---|
| | | 1 | 2 | 3 | 4 | 1 | 2 | 3 |
| Evaluation of mechanical performance | Tensile breaking stress (MPa) | 158 | 181 | 167 | 178 | 145 | 100 | 147 |
| | Bending strength (MPa) | 220 | 253 | 256 | 282 | 195 | 135 | 198 |
| | Flexural modulus (MPa) | 12700 | 12800 | 12800 | 17500 | 11400 | 11000 | 11500 |
| | Charpy impact strength ($kJ/m^2$) (with 23°C notch) | 18 | 19 | 20 | 23 | 16 | 10 | 16 |

<Examples 5 to 21 and Comparative Examples 4 and 5>

(Production of Carbon Fiber Bundle)

Carbon fiber bundles were produced using the carbon fiber bundles of the types shown in Tables 4 and 5.

Carbon fiber bundles were dipped in a dipping tank that was filled with a solution, which was obtained by diluting the aqueous sizing agent dispersions prepared using the amino group-containing modified polyolefin resin (main component of a sizing agent) of the types shown in Tables 4 and 5 so as to yield a concentration of 2.0% by mass, and included a free roller, followed by hot-air drying treatment at 150°C for 1 minute.

Thereafter, a heat treatment was performed under the heat treatment conditions (treatment temperature and treatment time) shown in Tables 4 and 5, thereby producing carbon fiber bundles. The heat treatment was performed in a muffle furnace in the air. In addition, if the heat treatment had not been performed, this was marked as "N/A" in the tables.

The amount of a sizing agent applying to the obtained carbon fiber bundles is shown in Tables 4 and 5.

(Production and Evaluation of Carbon Fiber-Containing Pellet)

Carbon fiber-containing pellets were produced in the same manner as in Examples 1 to 4 and Comparative Examples 1 to 3, except that the mixing ratio between a matrix resin and a carbon fiber bundle (CF) was set to PP-1/PP-2/MPP-1/CF=28/28/4/40.

Moreover, 100 parts by mass of the obtained carbon fiber-containing pellet was mixed with 100 parts by mass of PP-1 as a diluent resin, thereby preparing a carbon fiber-reinforced polypropylene resin blend containing 20% by mass of carbon fiber.

Test samples of the obtained carbon fiber-reinforced polypropylene resin blend were made in the same manner as in Examples 1 to 4 and Comparative Examples 1 to 3, and the mechanical performances thereof were evaluated. The results are shown in Tables 4 and 5.

[Table 4]

| | | Example | | | | | | | | | |
|---|---|---|---|---|---|---|---|---|---|---|---|
| | | 5 | 6 | 7 | 8 | 9 | 10 | 11 | 12 | 13 | 14 |
| Carbon fiber bundle (raw material) | | TR50S-15L | TR50S-15L | TR50S-15L | TR50S-15L | TR50S-15L | TR50S-15L | TR50S-15L | TR50S-15L | TR50S-15L | TR50S-15L |
| Main component of sizing agent | | (a-2) | (a-2) | (a-3) | (a-3) | (a-1) | (a-1) | (a-1) | (a-1) | (a-1) | (a-1) |
| Drying treatment temperature (°C) | | 150 | 150 | 150 | 150 | 150 | 150 | 150 | 150 | 150 | 150 |
| Heat treatment condition | Treatment temperature(°C) | N/A | 230 | N/A | 230 | 230 | 230 | 230 | 230 | 190 | 200 |
| | Treatment time (sec) | | 25 | | 25 | 5 | 20 | 60 | 150 | 25 | 25 |
| Amount of applying sizing agent (%) | | 0.8 | 0.8 | 0.8 | 0.8 | 0.8 | 0.8 | 0.8 | 0.8 | 0.8 | 0.8 |
| Evaluation of mechanical performance | Tensile breaking stress (MPa) | 170 | 210 | 150 | 151 | 162 | 178 | 175 | 165 | 155 | 170 |
| | Bending strength (MPa) | 300 | 300 | 205 | 225 | 230 | 250 | 245 | 240 | 226 | 245 |
| | Flexural modulus (MPa) | 12500 | 12500 | 12100 | 12700 | 12000 | 12500 | 12400 | 12700 | 12700 | 12500 |
| | Charpy impact strength ($kJ/m^2$) (with 23°C notch) | 23 | 28 | 17 | 19 | 18 | 19 | 19 | 18 | 17 | 19 |

[Table 5]

| | | Example | | | | | | | Comparative Example | |
|---|---|---|---|---|---|---|---|---|---|---|
| | | 15 | 16 | 17 | 18 | 19 | 20 | 21 | 4 | 5 |
| Carbon fiber bundle (raw material) | | TR50S-15L | TR50S-15L | TR50S-15L | TR50S-15L | TR40S-12L | TR50S-15L | TR50S-15L | TR50S-15L | TR50S-15L |
| Main component of sizing agent | | (a-1) | (a-1) | (a-1) | (a-1) | (a-1) | (a-1) | (a-1) | (a-1) | (a-1) |
| Drying treatment temperature (°C) | | 150 | 150 | 150 | 150 | 150 | 120 | 180 | 150 | 150 |
| Heat treatment condition | Treatment temperature (°C) | 250 | 270 | 300 | 230 | 230 | 230 | 230 | 230 | 230 |
| | Treatment time (sec) | 25 | 25 | 10 | 25 | 25 | 25 | 25 | 25 | 25 |
| Amount of applying sizing agent (%) | | 0.8 | 0.8 | 0.8 | 0.5 | 0.4 | 0.8 | 0.8 | 0.15 | 6.0 |
| Evaluation of mechanical performance | Tensile breaking stress (MPa) | 160 | 153 | 150 | 180 | 160 | 178 | 185 | 120 | 142 |
| | Bending strength (MPa) | 235 | 215 | 210 | 245 | 220 | 250 | 260 | 150 | 190 |
| | Flexural modulus (MPa) | 12200 | 12300 | 12500 | 12600 | 12200 | 12700 | 12900 | 11400 | 12000 |
| | Charpy impact (kJ/$m^2$) (with 23°C notch) | 18 | 17 | 17 | 20 | 20 | 19 | 20 | 16 | 16 |

<Examples 22 to 23>

(Production of Carbon Fiber Bundles (CF-6) and (CF-7))

As a carbon fiber bundle, "TR50S-15L" was used, and the pre-sizing treatment using an aqueous dispersion type pre-sizing agent formed of an epoxy compound was performed. After drying, the carbon fiber bundle was wound around a bobbin, thereby obtaining a carbon fiber bundle having undergone the pre-sizing treatment.

As a pre-sizing agent, a main agent (a mixture of 50 parts by mass of "Epikote 828" (product name) and 30 parts by mass of "Epikote 1001" (product name) manufactured by Japan Epoxy Resins Co., Ltd.) and an emulsifier (manufactured by ADEKA CORPORATION, 20 parts by mass of "Pluronic F88" (product name)) were concurrently used, and the condition was adjusted such that the applying amount became 0.4% by mass.

Thereafter, the carbon fiber bundle having undergone the pre-sizing treatment was passed plural times through a fiber opening bar and a carbon fiber bundle width restriction bar alternately, thereby causing the carbon fiber bundle to have a predetermined width.

Separately, a portion of a touch roll was dipped in a tank that was filled with a solution obtained by diluting the aqueous sizing agent dispersion prepared using the compound (a-1) as an amino group-containing modified polyolefin resin so as to yield a concentration of 5.0% by mass, whereby the aqueous sizing agent dispersion was transferred to the touch roll surface. Subsequently, the carbon fiber bundle having a predetermined width was brought into contact with the touch roll surface, whereby the aqueous sizing agent dispersion applied to the carbon fiber bundle. At this time, this process was performed on two surfaces (front and back surfaces) of the carbon fiber bundle by using two touch rolls.

Thereafter, the carbon fiber bundle was cut to a predetermined length (6 mm) with a rotary cutter. Finally, the carbon fiber bundle was dried by being continuously introduced to a bed vibration type hot-air drying furnace set to 150°C, thereby obtaining a carbon fiber bundle (CF-6). The amount of the sizing agent applying to the obtained carbon fiber bundle (CF-6) is shown in Table 6.

In addition, the carbon fiber bundle (CF-6) was thermally treated in a muffle furnace at 230°C for 25 seconds in the air, thereby obtaining a carbon fiber bundle (CF-7). The amount of the sizing agent applying to the obtained carbon fiber bundle (CF-7) is shown in Table 6.

(Production and Evaluation of Carbon Fiber-Containing Pellet)

Carbon fiber-containing pellets were produced in the same manner as in Examples 1 to 4 and Comparative Examples 1 to 3, except that the mixing ratio and types of matrix resins and carbon fiber bundles were changed as shown in Table 7.

Moreover, 100 parts by mass of the obtained carbon fiber-containing pellet was mixed with 100 parts by mass of PP-1 as a diluent resin, thereby preparing a carbon fiber-reinforced polypropylene resin blend containing 20% by mass of carbon fiber.

Test samples of the obtained carbon fiber-reinforced polypropylene resin blend were made in the same manner as in Examples 1 to 4 and Comparative Examples 1 to 3, and the mechanical performances thereof were evaluated. The results are shown in Table 7.

<Comparative Example 6>

(Production of Carbon Fiber Bundle (CF-8))

A carbon fiber bundle (CF-8) was obtained in the same manner as that for the carbon fiber bundle (CF-6), except that an aqueous dispersion (concentration of 4.0% by mass) of a urethane resin (manufactured by DIC Corporation, "Hydran HW-930") was used as an aqueous sizing agent dispersion. The amount of the sizing agent applying to the obtained carbon fiber bundle (CF-8) is shown in Table 6.

(Production and Evaluation of Carbon Fiber-Containing Pellet)

A carbon fiber-containing pellet was produced in the same manner as in Examples 1 to 4 and Comparative Examples 1 to 3, except that the type and mixing ratio of a matrix resin and a carbon fiber bundle were changed as shown in Table 7.

Moreover, 100 parts by mass of the obtained carbon fiber-containing pellet was mixed with 100 parts by mass of PP-1 as a diluent resin, thereby preparing a carbon fiber-reinforced polypropylene resin blend containing 20% by mass of carbon fiber.

A test sample of the obtained carbon fiber-reinforced polypropylene resin blend was made in the same manner

as in Examples 1 to 4 and Comparative Examples 1 to 3, and the mechanical performances thereof were evaluated. The results are shown in Table 7.

[Table 6]

| Carbon fiber bundle | | CF-6 | CF-7 | CF-8 |
|---|---|---|---|---|
| Carbon fiber bundle (raw material) | | TR50S-15L | TR50S-15L | TR50S-15L |
| Main component of sizing agent | | (a-1) | (a-1) | Urethane resin |
| Drying treatment temperature (°C) | | 150 | 150 | 150 |
| Heat treatment condition | Treatment temperature (°C) | N/A | 230 | N/A |
| | Treatment time (sec) | | 25 | |
| Amount of applying sizing agent (% by mass) | | 2.5 | 2.5 | 2.0 |

[Table 7]

| Carbon fiber bundle | | | Example | | Comparative Example |
|---|---|---|---|---|---|
| | | | 22 | 23 | 6 |
| Carbon fiber-containing pellet | Matrix resin (% by mass) | PP-1 | 28 | 28 | 28 |
| | | PP-2 | 28 | 28 | 28 |
| | | MPP-1 | 4 | 4 | 4 |
| | Carbon fiber bundle (% by mass) | CF-6 | 40 | | |
| | | CF-7 | | 40 | |
| | | CF-8 | | | 40 |
| Carbon fiber-reinforced polypropylene resin blend | Diluent resin (PP-1) (parts by mass) | | 100 | 100 | 100 |
| | Amount of carbon fiber in resin blend (% by mass) | | 20 | 20 | 20 |
| Evaluation of mechanical performances | Tensile breaking stress (MPa) | | 120 | 140 | 90 |
| | Bending strength (MPa) | | 160 | 190 | 100 |
| | Flexural modulus (MPa) | | 9500 | 9500 | 9000 |
| | Charpy impact strength (kJ/$m^2$) (with 23°C notch) | | 10 | 12 | 6 |

As results in Tables 1 to 7 clearly show, the mechanical performances (tensile breaking stress, bending strength, flexural modulus, and Charpy impact strength) of the carbon fiber-containing pellets which contain the carbon fiber bundle of examples are superior to those of comparative examples. Moreover, a balance between the properties is also excellent.

The carbon fiber bundle of the present invention exhibits excellent affinity to a matrix resin.

INDUSTRIAL APPLICABILITY

The carbon fiber bundle of the present invention can exhibit excellent interface adhesion to a polyolefin resin, particularly to a polypropylene resin. Accordingly, this carbon fiber bundle is useful for reinforcing the polyolefin resin.

In addition, according to the method of producing the carbon fiber bundle of the present invention, excellent interface adhesion can be exhibited to a polyolefin resin, particularly to a polypropylene resin. Accordingly, a carbon fiber bundle useful for reinforcing the polyolefin resin is obtained in this method.

## Claims

1. A carbon fiber bundle to which an amino group-containing modified polyolefin resin has applied, wherein the amount of the applying amino group-containing modified polyolefin resin is 0.2 to 5.0 % by mass; and the amino group-containing modified polyolefin resin is a copolymer that comprises an amino group and 70 to 99.98 mol% of a repeating unit represented by the following General Formula (I) and 0.02 to 30 mol% of a repeating unit represented by the following General Formula (II) in a molecule:

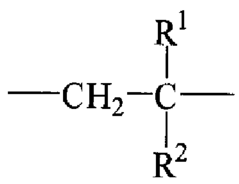 · · · (I)

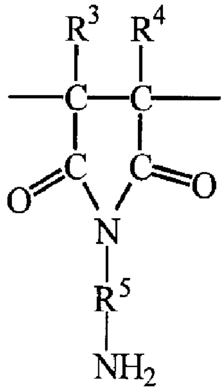 · · · (II)

(in Formulae (I) and (II), each of $R^1$ and $R^2$ independently represents a hydrogen atom, an alkyl group having 1 to 10 carbon atoms, a cycloalkyl group having 3 to 8 carbon atoms, an aryl group having 6 to 10 carbon atoms, an alkoxy group having 1 to 4 carbon atoms, an alkoxycarbonyl group having 1 to 18 carbon atoms, or an alkylcarboxyl group having 1 to 17 carbon atoms; each of $R^3$ and $R^4$ independently represents a hydrogen atom or an alkyl group having 1 to 6 carbon atoms; and $R^5$ represents an alkylene group having 1 to 12 carbon atoms, a cycloalkylene group having 5 to 17 carbon atoms, an arylene group having 6 to 12 carbon atoms, an arylalkylene group having 7 to 12 carbon atoms, or a polyoxyalkylene group having 4 to 30 carbon atoms; $R^1$ to $R^5$ may be the same as or different from each other in each repeating unit).

2. The carbon fiber bundle according to Claim 1, wherein the amino group-containing modified polyolefin resin is a product of a reaction between one kind of compound selected from the group consisting of an ethylene-ethyl acrylate-maleic anhydride copolymer, a maleic anhydride grafted polyethylene resin and a maleic anhydride grafted polypropylene resin, and a compound having two or more amino groups.

3. The carbon fiber bundle according to Claim 1 or 2, wherein the carbon fiber bundle is obtained by a heat treatment at 200 to 300°C for 5 seconds to 3 minutes, after the amino group-containing modified polyolefin resin is caused to apply to the surface of the carbon fiber bundle.

4. The carbon fiber bundle according to Claim 3, wherein the amount of the applying amino group-containing modified polyolefin resin is 0.5 to 4.0% by mass, and the carbon fiber bundle is obtained by a heat treatment at 200 to 260°C for 15 seconds to 3 minutes after the amino group-containing modified polyolefin resin is caused to apply to the surface of the carbon fiber bundle.

5. The carbon fiber bundle according to any one of Claims 1 to 4, wherein the amino group-containing modified polyolefin resin is caused to apply to the carbon fiber bundle by bringing an aqueous sizing agent dispersion containing the amino group-containing modified polyolefin resin into contact with the carbon fiber bundle.

6. The carbon fiber bundle according to any one of Claims 1 to 5, wherein a limiting viscosity of the amino group-containing modified polyolefin resin is 0.05 to 1.0 dL/g, measured in tetralin to which 1 g/L of 2,6-di-t-butyl-4-methylphenol has been added, at 135°C using an Ubbelohde-type capillary viscometer and a sample concentration of 0.8 to 1.6 g/L.

7. A method of producing a carbon fiber bundle, comprising:

applying 0.2 to 5.0% by mass of an amino group-containing modified polyolefin resin to a surface of the carbon fiber bundle,
wherein the amino group-containing modified polyolefin resin is a copolymer that comprises an amino group and 70 to 99.98 mol% of a repeating unit represented by the following General Formula (I) and 0.02 to 30 mol% of a repeating unit represented by the following General Formula (II) in a molecule:

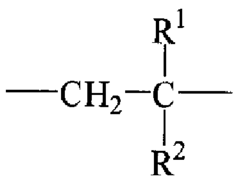
· · · (I)

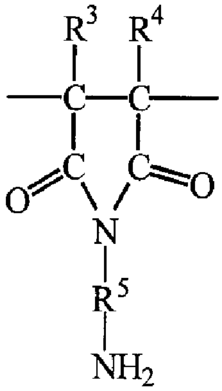
· · · (II)

(in Formulae (I) and (II), each of $R^1$ and $R^2$ independently represents a hydrogen atom, an alkyl group having 1 to 10 carbon atoms, a cycloalkyl group having 3 to 8 carbon atoms, an aryl group having 6 to 10 carbon atoms, an alkoxy group having 1 to 4 carbon atoms, an alkoxycarbonyl group having 1 to 18 carbon atoms, or an alkylcarboxyl group having 1 to 17 carbon atoms; each of $R^3$ and $R^4$ independently represents a hydrogen atom or an alkyl group having 1 to 6 carbon atoms; and $R^5$ represents an alkylene group having 1 to 12 carbon atoms, a cycloalkylene group having 5 to 17 carbon atoms, an arylene group having 6 to 12 carbon atoms, an arylalkylene group having 7 to 12 carbon atoms, or a polyoxyalkylene group having 4 to 30 carbon atoms; $R^1$ to $R^5$ may be the same as or different from each other in each repeating unit).

8. The method of producing a carbon fiber bundle according to Claim 7, comprising: performing a heat treatment at 200 to 300°C for 5 seconds to 3 minutes after applying the amino group-containing modified polyolefin resin to the surface of the carbon fiber bundle.

9. The method of producing a carbon fiber bundle according to Claim 7, comprising:

applying 0.5 to 4.0% by mass of the amino group-containing modified polyolefin resin to the surface of the carbon fiber bundle; and then
performing a heat treatment at 200 to 260°C for 15 seconds to 3 minutes.

10. The method of producing a carbon fiber bundle according to any one of Claims 7 to 9, wherein in applying the amino group-containing modified polyolefin resin to the carbon fiber bundle, the applying comprising bringing an aqueous sizing agent dispersion containing the amino group-containing modified polyolefin resin into contact with the carbon fiber bundle.

11. The method of producing a carbon fiber bundle according to Claim 10, wherein after applying the aqueous sizing agent dispersion to the surface of the carbon fiber bundle by bringing the carbon fiber bundle into contact with the aqueous sizing agent dispersion, the method further comprising
performing a drying treatment; and then
performing the heat treatment.

12. The method of producing a carbon fiber bundle according to Claim 11,
wherein the drying treatment is performed at 100 to 200°C.

**Patentansprüche**

1. Kohlenstofffaserbündel, auf dem ein Aminogruppenhaltiges modifiziertes Polyolefinharz aufgebracht ist,
wobei die Aufbringungsmenge des Aminogruppen-haltigen modifizierten Polyolefinharzes 0,2 bis 5,0 Masse-% beträgt und
das Aminogruppen-haltige modifizierte Polyolefinharz ein Copolymer ist, das eine Aminogruppe und 70 bis 99,98 mol-% einer durch die folgende allgemeine Formel (I) dargestellten Wiederholungseinheit und 0,02 bis 30 mol-% einer durch die folgende allgemeine Formel (II) dargestellten Wiederholungseinheit in einem Molekül umfasst:

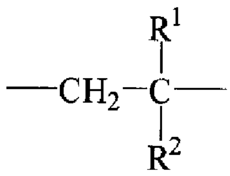 · · · (I)

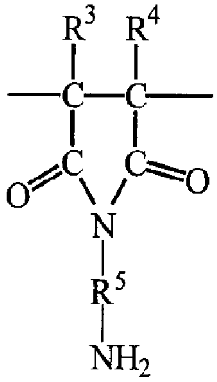 · · · (II)

(in den Formeln (I) und (II) stellt jedes von $R^1$ und $R^2$ unabhängig ein Wasserstoffatom, eine Alkylgruppe mit 1 bis 10 Kohlenstoffatomen, eine Cycloalkylgruppe mit 3 bis 8 Kohlenstoffatomen, eine Arylgruppe mit 6 bis 10 Kohlenstoffatomen, eine Alkoxygruppe mit 1 bis 4 Kohlenstoffatomen, eine Alkoxycarbonylgruppe mit 1 bis 18 Kohlenstoffatomen oder eine Alkylcarboxylgruppe mit 1 bis 17 Kohlenstoffatomen dar, jedes von $R^3$ und $R^4$ stellt unabhängig ein Wasserstoffatom oder eine Alkylgruppe mit 1 bis 6 Kohlenstoffatomen dar und $R^5$ stellt eine Alkylengruppe mit 1 bis 12 Kohlenstoffatomen, eine Cycloalkylengruppe mit 5 bis 17 Kohlenstoffatomen, eine Arylengruppe mit 6 bis 12 Kohlenstoffatomen, eine Arylalkylengruppe mit 7 bis 12 Kohlenstoffatomen oder eine Polyoxyalkylengruppe mit 4 bis 30 Kohlenstoffatomen dar, $R^1$ bis $R^5$ können in jeder Wiederholungseinheit gleich oder verschieden voneinander sein).

2. Kohlenstofffaserbündel gemäß Anspruch 1,
wobei das Aminogruppen-haltige modifizierte Polyolefinharz ein Produkt einer Reaktion zwischen einer Art einer Verbindung, ausgewählt aus der Gruppe, bestehend aus einem Ethylenethylacrylat-Maleinsäureanhydrid-Copolymer, einem Maleinsäureanhydrid-gepfropften Polyethylenharz und einem Maleinsäureanhydrid-gepfropften Propylenharz, und einer Verbindung mit zwei odermehreren Aminogruppen ist.

3. Kohlenstofffaserbündel gemäß Anspruch 1 oder 2,
wobei das Kohlenstofffaserbündel durch eine Wärmebehandlung bei 200 bis 300°C für 5 Sekunden bis 3 Minuten,

nachdem das Aminogruppen-haltige modifizierte Polyolefinharz auf die Oberfläche des Kohlenstofffaserbündels aufgebracht wurde, erhalten wird.

**4.** Kohlenstofffaserbündel gemäß Anspruch 3,
wobei die Aufbringungsmenge des Aminogruppen-haltigen modifizierten Polyolefinharzes 0,5 bis 4,0 Masse-% beträgt und
das Kohlenstofffaserbündel durch eine Wärmebehandlung bei 200 bis 260°C für 15 Sekunden bis 3 Minuten, nachdem das Aminogruppen-haltige modifizierte Polyolefinharz auf die Oberfläche des Kohlenstofffaserbündels aufgebracht wurde, erhalten wird.

**5.** Kohlenstofffaserbündel gemäß einem der Ansprüche 1 bis 4,
wobei das Aminogruppen-haltige modifizierte Polyolefinharz auf das Kohlenstofffaserbündel aufgebracht wird, indem eine wässrige Leimungsmitteldispersion, die das Aminogruppen-haltige modifizierte Polyolefinharz enthält, mit dem Kohlenstofffaserbündel in Kontakt gebracht wird.

**6.** Kohlenstofffaserbündel gemäß einem der Ansprüche 1 bis 5,
wobei eine Grenzviskosität des Aminogruppen-haltigen modifizierten Polyolefinharzes 0,05 bis 1,0 dl/g, gemessen in Tetralin, dem 1 g/l 2,6-Di-t-butyl-4-methylphenol zugesetzt wurde, bei 135°C unter Verwendung eines Ubbelohde-Kapillarviskosimeters und einer Probenkonzentration von 0,8 bis 1,6 g/l, beträgt.

**7.** Verfahren zur Herstellung eines Kohlenstofffaserbündels, umfassend:

das Aufbringen von 0,2 bis 5,0 Masse-% eines Aminogruppen-haltigen modifizierten Polyolefinharzes auf eine Oberfläche des Kohlenstofffaserbündels,
wobei das Aminogruppen-haltige modifizierte Polyolefinharz ein Copolymer ist, das eine Aminogruppe und 70 bis 99,98 mol-% einer durch die folgende allgemeine Formel (I) dargestellten Wiederholungseinheit und 0,02 bis 30 mol-% einer durch die folgende allgemeine Formel (II) dargestellten Wiederholungseinheit in einem Molekül umfasst:

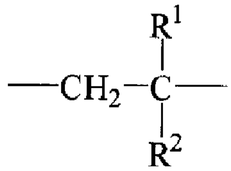 · · · (I)

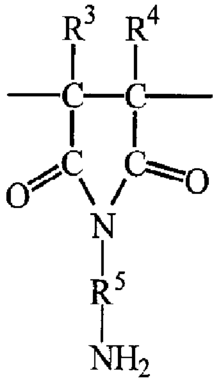 · · · (II)

(in den Formeln (I) und (II) stellt jedes von $R^1$ und $R^2$ unabhängig ein Wasserstoffatom, eine Alkylgruppe mit 1 bis 10 Kohlenstoffatomen, eine Cycloalkylgruppe mit 3 bis 8 Kohlenstoffatomen, eine Arylgruppe mit 6 bis 10 Kohlenstoffatomen, eine Alkoxygruppe mit 1 bis 4 Kohlenstoffatomen, eine Alkoxycarbonylgruppe mit 1 bis 18 Kohlenstoffatomen oder eine Alkylcarboxylgruppe mit 1 bis 17 Kohlenstoffatomen dar, jedes von $R^3$ und $R^4$ stellt unabhängig ein Wasserstoffatom oder eine Alkylgruppe mit 1 bis 6 Kohlenstoffatomen dar und $R^5$ stellt eine Alkylengruppe mit 1 bis 12 Kohlenstoffatomen, eine Cycloalkylengruppe mit 5 bis 17 Kohlenstoffatomen, eine Arylengruppe mit 6 bis 12 Kohlenstoffatomen, eine Arylalkylengruppe mit 7 bis 12 Kohlenstoffatomen oder eine Polyoxyalkylengruppe mit 4 bis 30 Kohlenstoffatomen dar, $R^1$ bis $R^5$ können in jeder Wiederholungseinheit

gleich oder verschieden voneinander sein).

**8.** Verfahren zur Herstellung eines Kohlenstofffaserbündels gemäß Anspruch 7, umfassend: das Durchführen einer Wärmebehandlung bei 200 bis 300°C für 5 Sekunden bis 3 Minuten nach dem Aufbringen des Aminogruppen-haltigen modifizierten Polyolefinharzes auf die Oberfläche des Kohlenstofffaserbündels.

**9.** Verfahren zur Herstellung eines Kohlenstofffaserbündels gemäß Anspruch 7, umfassend:

das Aufbringen von 0,5 bis 4,0 Masse-% des Aminogruppen-haltigen modifizierten Polyolefinharzes auf die Oberfläche des Kohlenstofffaserbündels und dann
das Durchführen einer Wärmebehandlung bei 200 bis 260°C für 15 Sekunden bis 3 Minuten.

**10.** Verfahren zur Herstellung eines Kohlenstofffaserbündels gemäß irgendeinem der Ansprüche 7 bis 9, wobei beim Aufbringen des Aminogruppen-haltigen modifizierten Polyolefinharzes auf das Kohlenstofffaserbündel das Aufbringen das Inkontaktbringen einer wässrigen Leimungsmitteldispersion, die das Aminogruppen-haltige modifizierte Polyolefinharz enthält, mit dem Kohlenstofffaserbündel umfasst.

**11.** Verfahren zur Herstellung eines Kohlenstofffaserbündels gemäß Anspruch 10, wobei nach dem Aufbringen der wässrigen Leimungsmitteldispersion auf die Oberfläche des Kohlenstofffaserbündels durch Inkontaktbringen des Kohlenstofffaserbündels mit der wässrigen Leimungsmitteldispersion das Verfahren ferner das Durchführen einer Trocknungsbehandlung und dann das Durchführen der Wärmebehandlung umfasst.

**12.** Verfahren zur Herstellung eines Kohlenstofffaserbündels gemäß Anspruch 11, wobei die Trocknungsbehandlung bei 100 bis 200°C durchgeführt wird.

## Revendications

**1.** Faisceau de fibres de carbone auquel une résine de polyoléfine modifiée contenant un groupe amino est appliquée, dans lequel la quantité de l'application de résine de polyoléfine modifiée contenant un groupe amino va de 0,2 à 5,0 % en masse ; et
la résine de polyoléfine modifiée contenant un groupe amino est un copolymère qui comprend un groupe amino et 70 à 99,98 % molaires d'un motif de répétition représenté par la Formule générale (I) suivante et 0,02 à 30 % molaires d'un motif de répétition représenté par la Formule générale (II) suivante dans une molécule :

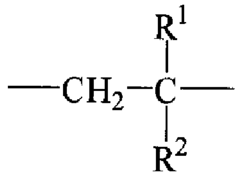

· · · (I)

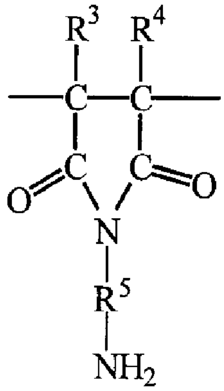

· · · (II)

(dans les Formules (I) et (II), chacun de $R^1$ et $R^2$ représente indépendamment un atome d'hydrogène, un groupe alkyle présentant 1 à 10 atomes de carbone, un groupe cycloalkyle présentant 3 à 8 atomes de carbone, un groupe

aryle présentant 6 à 10 atomes de carbone, un groupe alcoxy présentant 1 à 4 atomes de carbone, un groupe alcoxycarbonyle présentant 1 à 18 atomes de carbone, ou un groupe alkylcarboxyle présentant 1 à 17 atomes de carbone ; chacun de $R^3$ et $R^4$ représente indépendamment un atome d'hydrogène ou un groupe alkyle présentant 1 à 6 atomes de carbone ; et $R^5$ représente un groupe alkylène présentant 1 à 12 atomes de carbone, un groupe cycloalkylène présentant 5 à 17 atomes de carbone, un groupe arylène présentant 6 à 12 atomes de carbone, un groupe arylalkylène présentant 7 à 12 atomes de carbone, ou un groupe polyoxyalkylène présentant 4 à 30 atomes de carbone ; $R^1$ à $R^5$ peuvent être identiques ou différents les uns par rapport aux autres dans chaque motif de répétition).

**2.** Faisceau de fibres de carbone selon la revendication 1,
dans lequel la résine de polyoléfine modifiée contenant un groupe amino est un produit d'une réaction entre un type de composé sélectionné à partir du groupe constitué par un copolymère éthylène-acrylate d'éthyle-anhydride maléique, une résine de polyéthylène greffé par anhydride maléique et une résine de polypropylène greffé par anhydride maléique, et un composé présentant deux groupes amino ou plus.

**3.** Faisceau de fibres de carbone selon la revendication 1 ou 2,
dans lequel le faisceau de fibres de carbone est obtenu par un traitement thermique à 200 à 300°C pendant 5 secondes à 3 minutes, après que la résine de polyoléfine modifiée contenant un groupe amino est amenée à s'appliquer à la surface du faisceau de fibres de carbone.

**4.** Faisceau de fibres de carbone selon la revendication 3,
dans lequel la quantité de l'application de résine de polyoléfine modifiée contenant un groupe amino va de 0,5 à 4,0 % en masse, et
le faisceau de fibres de carbone est obtenu par un traitement thermique à 200 à 260 °C pendant 15 secondes à 3 minutes, après que la résine de polyoléfine modifiée contenant un groupe amino est amenée à s'appliquer à la surface du faisceau de fibres de carbone.

**5.** Faisceau de fibres de carbone selon l'une quelconque des revendications 1 à 4,
dans lequel la résine de polyoléfine modifiée contenant un groupe amino est amenée à s'appliquer au faisceau de fibres de carbone en mettant une dispersion aqueuse d'agent d'ensimage contenant la résine de polyoléfine modifiée contenant un groupe amino en contact avec le faisceau de fibres de carbone.

**6.** Faisceau de fibres de carbone selon l'une quelconque des revendications 1 à 5,
dans lequel une viscosité limite de la résine de polyoléfine modifiée contenant un groupe amino va de 0,05 à 1,0 dL/g, mesurée dans de la tétraline à laquelle 1 g/L de 2,6-di-t-butyl-4-méthylphénol a été ajouté, à 135 °C en utilisant un viscosimètre capillaire de type Ubbelohde et une concentration d'échantillon de 0,8 à 1,6 g/L.

**7.** Procédé de production d'un faisceau de fibres de carbone, comprenant :

l'application de 0,2 à 5,0 % en masse d'une résine de polyoléfine modifiée contenant un groupe amino à la surface du faisceau de fibres de carbone ;
dans lequel la résine de polyoléfine modifiée contenant un groupe amino est un copolymère qui comprend un groupe amino et 70 à 99,98 % molaires d'un motif de répétition représenté par la Formule générale (I) suivante et 0,02 à 30 % molaires d'un motif de répétition représenté par la Formule générale (II) suivante dans une molécule :

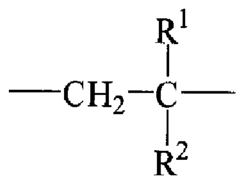 · · · (I)

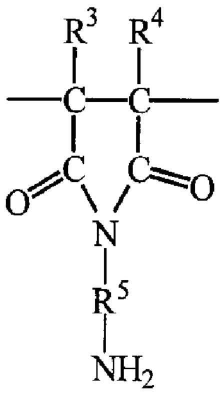

(II)

(dans les Formules (I) et (II), chacun de $R^1$ et $R^2$ représente indépendamment un atome d'hydrogène, un groupe alkyle présentant 1 à 10 atomes de carbone, un groupe cycloalkyle présentant 3 à 8 atomes de carbone, un groupe aryle présentant 6 à 10 atomes de carbone, un groupe alcoxy présentant 1 à 4 atomes de carbone, un groupe alcoxycarbonyle présentant 1 à 18 atomes de carbone, ou un groupe alkylcarboxyle présentant 1 à 17 atomes de carbone ; chacun de $R^3$ et $R^4$ représente indépendamment un atome d'hydrogène ou un groupe alkyle présentant 1 à 6 atomes de carbone ; et $R^5$ représente un groupe alkylène présentant 1 à 12 atomes de carbone, un groupe cycloalkylène présentant 5 à 17 atomes de carbone, un groupe arylène présentant 6 à 12 atomes de carbone, un groupe arylalkylène présentant 7 à 12 atomes de carbone, ou un groupe polyoxyalkylène présentant 4 à 30 atomes de carbone ; $R^1$ à $R^5$ peuvent être identiques ou différents les uns par rapport aux autres dans chaque motif de répétition).

**8.** Procédé de production d'un faisceau de fibres de carbone selon la revendication 7, comprenant :
la mise en œuvre d'un traitement thermique à 200 à 300 °C pendant 5 secondes à 3 minutes après application de la résine de polyoléfine modifiée contenant un groupe amino à la surface du faisceau de fibres de carbone.

**9.** Procédé de production d'un faisceau de fibres de carbone selon la revendication 7, comprenant :

l'application de 0,5 à 4,0 % en masse de la résine de polyoléfine modifiée contenant un groupe amino à la surface du faisceau de fibres de carbone ; puis
la mise en œuvre d'un traitement thermique à 200 à 260 °C pendant 15 secondes à 3 minutes.

**10.** Procédé de production d'un faisceau de fibres de carbone selon l'une quelconque des revendications 7 à 9, dans lequel lors de l'application de la résine de polyoléfine modifiée contenant un groupe amino au faisceau de fibres de carbone, l'application comprend le fait de mettre une dispersion aqueuse d'agent d'ensimage contenant la résine de polyoléfine modifiée contenant un groupe amino en contact avec le faisceau de fibres de carbone.

**11.** Procédé de production d'un faisceau de fibres de carbone selon la revendication 10, dans lequel après l'application de la dispersion aqueuse d'agent d'ensimage à la surface du faisceau de fibres de carbone en amenant le faisceau de fibres de carbone en contact avec la dispersion aqueuse d'agent d'ensimage, le procédé comprenant en outre la mise en œuvre d'un traitement de séchage ; puis
la mise en œuvre du traitement thermique.

**12.** Procédé de production d'un faisceau de fibres de carbone selon la revendication 11, dans lequel le traitement de séchage est mis en œuvre à 100 à 200 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6107442 A
- JP 2084566 A
- JP 2006124847 A
- US 4720516 A


### Non-patent literature cited in the description


- *Macromolecules,* 1993, vol. 26, 2087-2088